(19) **Europäisches Patentamt / European Patent Office / Office européen des brevets**

(11) **EP 3 800 813 B1**

(12) # FASCICULE DE BREVET EUROPEEN

(45) Date de publication et mention de la délivrance du brevet:
**19.07.2023 Bulletin 2023/29**

(21) Numéro de dépôt: **20197273.4**

(22) Date de dépôt: **21.09.2020**

(51) Classification Internationale des Brevets (IPC):
**H04L 1/00** *(2006.01)* **H04L 1/20** *(2006.01)*

(52) Classification Coopérative des Brevets (CPC):
**H04L 1/005; H04L 1/0052; H04L 1/0058; H04L 1/203**

(54) **PROCÉDÉ ET UN DISPOSITIF DE PRÉDICTION DES PERFORMANCES D'UN RÉCEPTEUR DANS UN SYSTÈME DE COMMUNICATION**

VERFAHREN UND VORRICHTUNG ZUR VORHERSAGE DER LEISTUNGEN EINES EMPFÄNGERS IN EINEM KOMMUNIKATIONSSYSTEM

METHOD AND DEVICE FOR PREDICTING THE PERFORMANCE OF A RECEIVER IN A COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2019 FR 1910965**

(43) Date de publication de la demande:
**07.04.2021 Bulletin 2021/14**

(73) Titulaires:
- **THALES**
  **92400 Courbevoie (FR)**
- **Institut National Polytechnique de Toulouse**
  **31029 Toulouse Cedex 4 (FR)**
- **Centre national de la recherche scientifique**
  **75016 Paris (FR)**

(72) Inventeurs:
- **SAHIN, Serdar**
  **92622 GENNEVILLIERS CEDEX (FR)**
- **CIPRIANO, Antonio**
  **92622 GENNEVILLIERS CEDEX (FR)**
- **POULLIAT, Charly**
  **31071 TOULOUSE CEDEX 7 (FR)**
- **BOUCHERET, Marie-Laure**
  **31071 TOULOUSE CEDEX 7 (FR)**

(74) Mandataire: **Atout PI Laplace**
**Immeuble "Visium"**
**22, avenue Aristide Briand**
**94117 Arcueil Cedex (FR)**

(56) Documents cités:
- **SERDAR \C{S}AHIN ET AL: "Iterative Decision Feedback Equalization Using Online Prediction", ARXIV.ORG, CORNELL UNIVERSITY LIBRARY, 201 OLIN LIBRARY CORNELL UNIVERSITY ITHACA, NY 14853, 9 octobre 2018 (2018-10-09), XP081059139,**
- **SAHIN SERDAR ET AL: "Iterative Equalization With Decision Feedback Based on Expectation Propagation", IEEE TRANSACTIONS ON COMMUNICATIONS, IEEE SERVICE CENTER, PISCATAWAY, NJ. USA, vol. 66, no. 10, 4 juin 2018 (2018-06-04), pages 4473-4487, XP011692501, ISSN: 0090-6778, DOI: 10.1109/TCOMM.2018.2843760 [extrait le 2018-10-15]**
- **WU SHENG ET AL: "Message-Passing Receiver for Joint Channel Estimation and Decoding in 3D Massive MIMO-OFDM Systems", IEEE TRANSACTIONS ON WIRELESS COMMUNICATIONS, IEEE SERVICE CENTER, PISCATAWAY, NJ, US, vol. 15, no. 12, 22 septembre 2016 (2016-09-22), pages 8122-8138, XP011636603, ISSN: 1536-1276, DOI: 10.1109/TWC.2016.2612629 [extrait le 2016-12-08]**

**Description**

L'invention se situe dans le domaine des télécommunications et plus particulièrement pour la prédiction des performances d'un récepteur numérique utilisé dans les systèmes de télécommunications filaires ou sans fils. L'invention s'applique notamment lorsque le récepteur évolue dans des environnements pour lesquels les canaux de propagation sont très sélectifs en fréquence, par exemple, les bandes ultra haute fréquence ou UHF, les bandes haute fréquence HF, les communications 4G, 5G, etc. Elle trouve aussi son application pour des canaux artificiellement sélectifs en fréquence, par exemple dans le cas de systèmes de transmissions coopératives où plusieurs émetteurs émettent le même signal simultanément. En général des canaux non sélectifs en fréquence peuvent le devenir par augmentation de la bande passante.

L'invention trouve son application dans tous les systèmes fonctionnant avec des canaux sélectifs en fréquence, dans les communications filaires, dans les communications acoustiques, ou encore dans les applications d'enregistrements magnétiques.

L'invention concerne notamment la prédiction du comportement des récepteurs pour des systèmes à multiplexage par répartition orthogonale de la fréquence (Orthogonal Frequency Division Multiplexing -OFDM), éventuellement à accès multiple (OFDMA). Elle est aussi utilisée dans des systèmes de type mono-porteuse avec une égalisation dans le domaine fréquentiel (Single Carrier-Frequency Domain Equalization - SC-FDE) ou encore dans des systèmes avec une modulation mono-porteuse à accès multiple par répartition en fréquence (Single Carrier-Frequency Division Multiple Access - SC-FDMA). Par exemple, les standards cellulaires 3GPP de 4G et 5G, ou le standard WiMAX (IEEE 802.16) ou WiFi (IEEE 802.11) utilisent de telles technologies. La technique proposée dans l'invention peut s'étendre facilement pour l'homme de l'art à des systèmes semblables, comme ceux qui utilisent des modulations filtrées (par exemple Filter Bank Multi-Carrier - FBMC ou des techniques semblables).

Un des problèmes posés dans le domaine des télécommunications est de pouvoir prédire les performances d'un récepteur, par exemple en termes de taux d'erreur paquet ou PER (Packet Error Rate) et l'évolution de certains paramètres internes du récepteur en fonction de la connaissance du canal de transmission, de la configuration du mode de transmission (schéma de modulation et codage ou MCS (Modulation and Coding Scheme)). Dans le cas d'un récepteur itératif, les itérations du récepteur seront prises en compte.

Le modèle de prédiction prend généralement en compte les algorithmes d'égalisation (ou détection, au sens plus large) et de décodage mis en oeuvre lors de la réception pour décoder un message reçu.

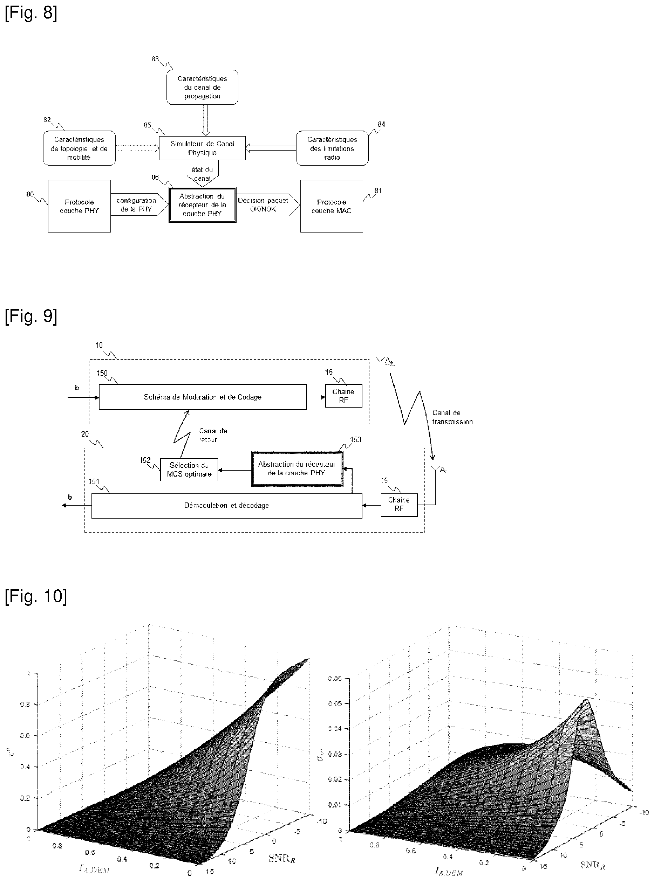

Les méthodes de prédiction des performances de la couche physique PHY sont utilisées depuis longtemps pour modéliser le comportement de la chaîne de réception d'un équipement. Cela, parce qu'il est très coûteux au niveau d'un simulateur système qui évalue un réseau comprenant un nombre important de liens actifs simultanés, de simuler chaque lien avec un simulateur complet de couche PHY qui fait tourner pour chaque paquet tous les blocs algorithmiques du récepteur. Il est préférable, par exemple, pour avoir un niveau de complexité acceptable par le simulateur système (figure 8), de trouver des méthodes approximées, mais plus rapides et peu coûteuses pour prédire le comportement du récepteur dans sa globalité (égaliseur, démodulateur et décodeur). Une catégorie de ces méthodes consiste à utiliser des modèles analytiques du récepteur, c'est-à-dire une ou plusieurs équations analytiques qui servent à décrire le comportement du récepteur et qui permettent ainsi de calculer une estimée de la performance du récepteur à partir des informations disponibles en entrée du récepteur (par exemple, tout ou partie du signal reçu, des paramètres comme le rapport signal sur bruit (Signal to Noise Ratio - SNR), les réalisations des canaux de propagations qui ont affecté le signal reçus, etc.). Une autre catégorie de méthodes approximées pour décrire le comportement du récepteur utilise des modèles semi-analytiques où le comportement du récepteur est décrit en partie par une ou plusieurs équations analytiques et en partie à par des fonctions tabulées numériquement qui sont calculées par simulation soit au moment de la construction du modèle, soit au moment de l'utilisation du modèle. Ces fonctions tabulées sont nécessaires en plus des équations analytiques, dans les cas où une fonction analytique est impossible à dériver ou trop complexe. L'utilisation de ces modèles semi-analytique est semblable à celle des modèles analytiques : les modèles semi-analytiques aussi permettent de calculer une estimé des performances du récepteur à partir d'informations disponibles en entrée du récepteur. Dans un modèle semi-analytique, ou analytique du récepteur, un sous-bloc ou sous-fonction spécifique du récepteur (par exemple une prise de décision, un filtrage, etc.) est modélisé par une équation ou sous-ensemble d'équations ou une fonction tabulée spécifique. Quand seul le comportement d'un sous-bloc ou sous-fonction est pris en considération, seul le modèle analytique ou semi-analytique de ce sous-bloc ou sous-fonction spécifique au sein du récepteur sera utilisé pour calculer les sorties qui caractérisent son comportement. Le modèle analytique ou semi-analytique du récepteur peut donc être divisé en un ensemble de modèles analytiques ou semi-analytiques de chacun de ses sous-blocs ou sous-fonctions, dont les entrées et les sorties sont opportunément reliées ensemble pour donner une estimation pertinente du comportement globale.

L'invention porte notamment sur une classe de récepteurs itératifs, ayant des détecteurs et des décodeurs à entrées et sorties souples ou SISO (Soft Input Soft Output).

Pour ce type de récepteurs, l'art antérieur propose différentes méthodes pour prédire leur comportement.

Une méthode utilisée est la méthode d'évolution de densité (DE - Density Evolution) qui consiste à suivre l'évolution dynamique des fonctions de densité de probabilité (PDF - Probability Density Function) des rapports de vraisemblance logarithmiques (Log-Likelihood Ratios - LLRs) des bits échangés entre les modules SISO du décodeur, décrite par exemple dans le document de J. Boutros and G. Caire, intitulé "Iterative multiuser joint decoding: unified framework and asymptotic analysis," IEEE Trans. Inf. Theory, vol. 48, no. 7, pp. 1772-1793, Jul. 2002. Cette méthode d'évolution de la densité présente une complexité de calcul très élevée et une mauvaise adaptation à la prédiction d'un récepteur complet (détecteur plus décodeur).

Une autre méthode de prédiction des performances est l'analyse des courbes de transfert d'information extrinsèque (Extrinsic Information Transfer - EXIT), qui est une forme simplifiée d'évolution de densité où l'on suit un seul paramètre qui va caractériser la PDF (typiquement on assume une PDF gaussienne avec un lien analytique explicite entre variance et moyenne). Un exemple est donné dans la publication de S. ten Brink, "Designing itérative decoding schemes with the extrinsic information transfer chart," in AEU Int. J. Electron. Commun., vol. 54, no. 6, Jan. 2000. Cette méthode est très utile pour la conception des codes correcteurs d'erreurs et pour leur analyse asymptotique (c'est-à-dire pour des mots de codes de taille tendant vers l'infini, donc en pratique très grande). Cette méthode basée sur les courbes EXIT n'est pas bien adaptée pour prédire les performances d'un récepteur complet formé d'un détecteur suivi d'un décodeur, ces derniers étant influencés par le canal expérimenté par le signal reçu. Dans ce contexte, les courbes EXIT sont différentes pour chaque réalisation de canal. Il faut donc une grande multitude de courbes pour couvrir les canaux possibles vus par le récepteur. Autrement dit, la mémoire nécessaire pour implémenter cette méthode (i.e. pour sauvegarder toutes les courbes) est très importante. De plus, la méthode EXIT perd de la précision pour des transmissions utilisant des mots de code de taille moyenne (quelques milliers de bits) ou courte (quelques dizaines ou centaines de bits). Ces derniers sont très utilisés, surtout pour des trafics de type voix, alertes, information de localisation, ou données peu volumineuses. De plus, une courbe EXIT différente doit être générée pour chaque configuration du récepteur. D'autre part, la méthode EXIT n'est pas bien adaptée quand le signal envoyé est affecté par plusieurs états du canal.

Une autre classe de méthodes de prédiction, utilisée pour les turbo égaliseurs linéaires à effacement d'interférence (linear equalizers with interférence cancellation - LE-IC) obtenue selon le critère de minimisation de l'erreur moyenne quadratique (minimum mean squared error - MMSE), est celle des méthodes semi-analytiques. Ces méthodes combinent des approximations analytiques pour décrire le fonctionnement du turbo récepteur (notamment pour modéliser le comportement de l'égaliseur), des fonctions de compression (typiquement des fonctions de compression basées sur l'information mutuelle) qui sont utilisées pour donner un modèle parcimonieux du récepteur quand le signal transmis est affecté par plusieurs réalisations différentes du canal de propagation, et des fonctions de suivi d'évolution de métriques internes au récepteur (notamment l'information extrinsèque échangée entre les modules tels que le décodeur canal). Une telle méthode est décrite dans le brevet EP2957057. La référence de R. Visoz, A. O. Berthet et al., "Semi-analytical performance prédiction methods for itérative MMSE-IC multiuser MIMO joint decoding," IEEE Trans. Commun., vol. 58, no. 9, pp. 2576-2589, Sep. 2010, décrit une application dans la simulation système de noeuds incluant des récepteurs itératifs avancés.

Récemment de nouveaux récepteurs avec modules SISO basés sur des variantes des algorithmes de passage de message (Message Passing Algorithm - MPA) basés sur la propagation d'espérance (Expectation Propagation - EP), ont vu le jour. Ces algorithmes ont un coût en termes de calculs non négligeable, il est donc intéressant d'avoir des méthodes de prédiction rapides et peu coûteuses.

Dans le cadre des algorithmes itératifs basés sur la propagation d'espérance, l'état de l'art décrit aussi des techniques d'évolution d'état (State Evolution - SE) qui sont capables de prédire l'évolution des variances extrinsèques des messages échangés entre deux modules SISO qui appliquent un MPA avec EP, quand la taille des vecteurs échangés tend vers l'infini. Un exemple de récepteur est donné dans le document de S. Sahin, A. M. Cipriano, C. Poulliat, and M. Boucheret, "A framework for itérative frequency domain EP-based receiver design," IEEE Trans. Commun., vol. 66, no. 12, pp. 6478-6493, Dec. 2018. Le document de K. Takeuchi, "Rigorous dynamics of expectation-propagation-based signal recovery from unitarily invariant measurements," in IEEE Proc. In Int. Symp. on Information Theory (ISIT), Jun. 2017, pp. 501-505, décrit un algorithme de passage de messages approximés orthogonal (Orthogonal Approximate Message Passing - OAMP). De plus, ces méthodes ne sont pas adaptées à la classe de récepteurs itératifs basés sur EP considérés ici, parce qu'elles ne prennent pas en compte les spécificités du démodulateur souple utilisé dans ce type de récepteurs, comme sa dépendance des LLRs a priori. Ces méthodes peuvent s'appliquer à des récepteurs itératifs, mais elles offrent peu de précision pour des mots de code de petite taille.

Le document de Sahin Serdar et al, intitulé « Iterative Decision Feedback Equalization Using Online Prédiction », XP081059139, divulgue une nouvelle architecture pour un turbo-récepteur DFE avec des filtres statiques qui utilise des techniques de prédiction semi-analytiques en temps réel pour calculer ses filtres. Cette référence cherche à prédire le comportement d'une partie du récepteur pour simplifier le filtre égaliseur. Dans ce document, le procédé utilise un modèle d'égaliseur temporel avec une matrice de covariance des symboles qui n'est pas un multiple de l'identité. Dans cet enseignement, le modèle de l'égaliseur est connecté directement avec celui du démodulateur.

La publication de Sahin Serdar et al, intitulée «Iterative Equalization With Decision Feedback Based on Expectation Propagation, XP011692501, présente un turbo-égaliseur temporel avec retour de décision (Decision Feedback Equalizer) DFE calculé selon la méthode EP, dans le but d'améliorer le fonctionnement des égaliseurs linéaires. Le turbo-égaliseur DFE peut améliorer aussi les performances en augmentant le nombre de boucles de retour entre le démodulateur et l'égaliseur, principe exploité aussi par la classe d'égaliseurs dont la présente solution souhaite prédire les performances. Ce document présente des égaliseurs turbo-DFE avec EP dans le domaine temporel.

Le document de Wu Sheng et al, intitulé « Message-Passing Receiver for Joint Channel Estimation and Decoding in 3D Massive MIMO-OFDM Systems, XP011636603, concerne un récepteur de type « message-paging » pour une estimation conjointe d'un canal et le décodage dans des systèmes MIMO 3D avec évanouissements en fréquence. Il s'agit d'un détecteur pour un système OFDM qui exploite la propagation d'espérance pour la détection des symboles et en particulier une variante de l'algorithme EP avec une approximation quadratique est utilisée afin de pouvoir estimer le canal à partir des estimés souples de données, en complément des symboles pilotes. Par ailleurs une méthode de maximisation de l'espérance est utilisée pour fournir une estimée du profil statistique du canal de propagation, qui ensuite est exploitée pour raffiner l'estimation du canal. La méthode de prédiction concerne des transmissions mono-porteuses (prédiction pas abordée dans le document de l'état de l'art) et ne traite pas les aspects liées à l'estimation du canal.

Il existe actuellement un besoin de disposer d'un procédé et d'un dispositif de prédiction du comportement d'un récepteur permettant notamment :

- D'améliorer la précision de la prédiction pour des paquets de petite/moyenne taille, de la centaine de bits jusqu'à quelques milliers de bits,
- D'éviter de mettre en oeuvre des procédures de calibration de la prédiction qui se révèlent longues et coûteuses et participent à la diminution de la précision,
- D'éviter des méthodes très coûteuses en termes d'occupation mémoire et de nombre de calculs,
- De prendre en compte les spécificités des démodulateurs, notamment des démodulateurs souples qui caractérisent les récepteurs itératifs avec propagation d'espérance ou EP.

La suite de la description fait appel aux notations suivantes :

- $x$ dénote un scalaire;
- **x** dénote un vecteur;
- **X** dénote une matrice;
- $[x_i]_{i=1..N}$ est le vecteur contenant les coefficients $x_i$;
- $\left[\mathbf{X}_{i,j}\right]_{\substack{i=1\dots R \\ j=1\dots M}}$ est une matrice par bloc qui contient les matrices $\mathbf{X}_{i,j}$;
- $(\cdot)^T$ est l'opérateur transposition, qui peut être appliqué à des vecteurs ou à des matrices;
- $(\cdot)^*$ est l'opérateur conjugaison, qui peut être appliqué à des vecteurs ou à des matrices;
- $(\cdot)^H$ est l'opérateur de transposition hermitienne, qui peut être appliqué à des vecteurs ou à des matrices;
- $\overline{\mathbf{x}}$ dénote la représentation dans le domaine fréquentiel du vecteur **x** ;
- $\overline{\mathbf{X}}$ dénote la représentation dans le domaine fréquentiel de la matrice **X** ;
- $\overline{\mathrm{tr}}(\mathbf{X})$ est la trace de la matrice **X**;
- $\otimes$ dénote le produit de Kronecker;
- $\odot$ dénote le produit terme à terme entre deux vecteurs ($\boldsymbol{c} = \boldsymbol{a} \odot \boldsymbol{b}$ est tel que $c_n = a_n b_n$), aussi appelé produit matriciel de Hadamard, ou produit de Schur ;
- circ(**x**) est une matrice circulante avec première colonne égale à **x**;
- diag(**x**) est une matrice diagonale avec les coefficients **x** sur sa diagonale;
- **b** : le vecteur des bits d'information ;
- $\boldsymbol{d}$ : le vecteur des bits codés et entrelacés ;
- $E_{\mathcal{P}}[x]$ : espérance de $x$ selon la distribution de probabilités $\mathcal{P}$, $E_{\mathcal{P}}[x] = \sum_{\alpha \in \mathcal{X}} \alpha \mathcal{P}(\alpha)$ ;
- $\boldsymbol{F}_M$ : la matrice de transformée de Fourier de taille $M \times M$, l'entrée $k, l$ de la matrice est $[\boldsymbol{F}_M]_{k,l} = \frac{1}{\sqrt{M}} exp\left(-\frac{2j\pi kl}{M}\right)$, $k = 0, ..., M - 1$ et $l = 0, ..., M - 1$. L'inverse de la matrice de transformée de Fourier coïncide avec sa transposée conjuguée : $\boldsymbol{F}_M^H$ ;
- $\boldsymbol{I}_N$ : la matrice identité de taille $N \times N$ ;
- $\mathcal{M}_1$ : la fonction d'étiquetage binaire d'un symbole de la constellation ;
- $M$ : la taille d'un vecteur de données à égaliser, correspondant aussi à la taille de FFT dans un émetteur de type SC-FDMA ;

- $N$ : la taille de la IFFT dans un émetteur de type SC-FDMA, correspondant au nombre total de sous-porteuses du modulateur/démodulateur, équivalent au nombre d'échantillons temporels,
- $p$ : l'identifiant entier des blocs de données (entre 1 et $P$) ;
- $P$ : le nombre de bloc de données transmises ;
- $R$ : le nombre d'antennes de réception ;
- $s$ : l'identifiant entier de l'auto-itération (entre 0 et $\mathcal{S}_\tau$) ;
- $\mathcal{S}_\tau$ : le nombre d'auto-itérations du récepteur (nombre entier égal ou supérieur à zéro) pour la $\tau$-ième turbo-itération ;
- $\tau$ : l'identifiant entier de la turbo-itération (entre 0 et $\mathcal{T}$) ;
- $\mathcal{T}$ : le nombre de turbo-itérations du récepteur (nombre entier égal ou supérieur à zéro) ;
- $Var_{\mathcal{P}}[x]$ : la variance de $x$ selon la distribution de probabilité $\mathcal{P}$, $Var_{\mathcal{P}}[x] = E_{\mathcal{P}}[|x - E_{\mathcal{P}}[x]|^2]$ ;

Un objet de l'invention est un procédé de prédiction des performances d'un récepteur au sein d'un système de communication comprenant au moins un émetteur et un récepteur, ledit émetteur utilisant une modulation codée entrelacée par bit pour moduler les données avant transmission sur un canal de communication, ledit récepteur mettant en oeuvre la détection et le décodage des signaux reçus à travers une chaîne comprenant un égaliseur, un démodulateur, un décodeur de canal, où le démodulateur fournit un signal de retour à l'égaliseur (auto-itération) le procédé de prédiction comportant au moins les étapes suivantes :

- pour chaque bloc $p$ du signal reçu, pour chaque auto-itération $s$, déterminer la valeur du rapport signal sur bruit (signal-to-noise ratio - SNR) après égalisation $\text{SNR}_{\text{EQ},p}^{\prime(0,s)}$ et la puissance du canal équivalent après égalisation $\chi_p^{(0,s)}$ en fonction d'une réalisation de canal $\boldsymbol{H}_p$ expérimentée par le bloc $p$ du signal, de la variance du bruit ou du rapport signal sur bruit moyen avant égalisation $\text{SNR}_p$, de la variance des symboles souples basée sur la propagation d'espérance EP $v_p^{d(0,s)}$ en provenance de la sortie à la précédente auto-itération du modèle analytique du lissage basé sur la propagation d'espérance EP et du modèle tabulé du démodulateur basé sur la propagation d'espérance EP,

- pour chaque bloc p de signal reçu, à chaque auto-itération s, calculer un SNR après égalisation avec dispersion $\text{SNR}_{\text{EQ},p}^{(0,s)}$, en fonction du SNR après égalisation $\text{SNR}_{\text{EQ},p}^{\prime(0,s)}$ précédemment calculé et d'une réalisation d'un écart $\epsilon_p^{d(0,s)}$ sur la variance de symboles a priori déterminée par un générateur de nombre aléatoire prenant en entrée la dispersion sur la variance des symboles, ou la dispersion sur la variance du retour en cas d'auto-itération du récepteur,

- pour chaque bloc $p$ du signal reçu, à chaque auto-itération $s$, à l'exception de l'auto-itération finale, obtenir la variance des symboles extrinsèques (symboles souples EP brutes) $v_p^{\star(0,s+1)}$, et sa dispersion $\sigma_{v^\star,p}^{(0,s+1)}$, avec le modèle tabulé du démodulateur EP, à partir du SNR après égalisation avec dispersion $\text{SNR}_{\text{EQ},p}^{(0,s)}$,

- pour chaque bloc $p$ du signal reçu, à chaque auto-itération $s$, à l'exception de l'auto-itération finale, obtenir la variance des symboles souples EP $v_p^{d(0,s+1)}$ et sa dispersion $\sigma_{v^d,p}^{(0,s+1)}$, en utilisant le modèle analytique du lissage EP, en utilisant la variance des symboles souples EP brutes $v_p^{\star(0,s+1)}$ et sa dispersion $\sigma_{v^\star,p}^{(0,s+1)}$, les valeurs de l'auto-itération précédente, de la variance souple EP $v_p^{d(0,s)}$ et de sa dispersion $\sigma_{v^d,p}^{(0,s)}$ et les paramètres de lissage associés,

- à l'auto-itération finale

$$s = \mathcal{S},$$

calculer le SNR après égalisation compressé $\mathrm{SNR}_R^{(0)}$ à partir des SNR après égalisation

$$\mathrm{SNR}_{EQ,p}^{(0)} = \mathrm{SNR}_{EQ,p}^{(0,s)}$$

fourni par chacun des modèles semi-analytiques du récepteur associés à *P* blocs, avec une méthode de compression de SNR,
- utiliser un modèle de démappage et de décodage conjoints en tenant compte de la valeur du SNR après égalisation compressé $\mathrm{SNR}_R^{(0)}$ et d'une information du démodulateur souple initialisée à zéro, pour obtenir une ou plusieurs métriques caractérisant les performances du récepteur.

L'invention concerne aussi un procédé de prédiction des performances d'un récepteur au sein d'un système de communication comprenant au moins un émetteur et un récepteur, l'émetteur utilisant une modulation codée entrelacée par bit pour moduler les données avant transmission sur un canal de communication, le récepteur mettant en oeuvre la détection et le décodage des signaux reçus par l'utilisation d'un égaliseur, un démodulateur, et un décodeur canal, pouvant échanger de l'information entre eux, comportant au moins les étapes suivantes :

- pour un bloc p du signal reçu, à chaque auto-itération *s* et à chaque turbo-itération $\tau$, déterminer la valeur du SNR après égalisation $\mathrm{SNR}_{EQ,p}'^{(\tau,s)}$ et la puissance du canal équivalent après égalisation $\chi_p^{(\tau,s)}$ en fonction de la réali-sation de canal $\boldsymbol{H}_p$ expérimentée par le bloc *p* du signal, de la variance du bruit avant égalisation ou de façon équivalente du rapport signal sur bruit moyen avant égalisation $\mathrm{SNR}_p$, de la variance des symboles souples EP $v_p^{d(\tau,s)}$ en provenance de la sortie à la précédente auto-itération d'un modèle tabulé du démodulateur EP suivie par un modèle analytique du lissage EP, et de la variance des symboles souples a priori $v^{a(\tau)}$ en provenance du décodeur/démodulateur conjoints,
- pour chaque bloc p de signal reçu, à chaque auto-itération s et à chaque turbo-itération $\tau$, calculer un SNR après égalisation avec dispersion $\mathrm{SNR}_{EQ,p}^{(\tau,s)}$, en fonction du SNR après égalisation $\mathrm{SNR}_{EQ,p}'^{(\tau,s)}$ précédemment calculé et d'une réalisation de l'écart $\epsilon_p^{d(\tau,s)}$ sur la variance de symboles a priori déterminée par un générateur de nombre aléatoire prenant en entrée la dispersion sur la variance des symboles,
- pour chaque bloc p de signal reçu, à chaque auto-itération *s* et à chaque turbo-itération $\tau$, déterminer la variance moyenne des symboles extrinsèques $v_p^{\star(\tau,s+1)}$ et la dispersion de la variance des symboles extrinsèques $\sigma_{v^\star,p}^{(\tau,s+1)}$, en fonction du SNR après égalisation avec dispersion $\mathrm{SNR}_{EQ,p}^{(\tau,s)}$ et de l'information a priori du démodulateur souple $I_{A,DEM}^{(\tau)}$,

- déterminer les nouvelles variances extrinsèques lissées $v_p^{d(\tau,s+1)}$ et leur dispersion $\sigma_{v^d,p}^{(\tau,s+1)}$ à utiliser dans l'auto-itération suivante s + 1 par le bloc de données à partir des variances extrinsèques $v_p^{\star(\tau,s+1)}$ et de leur dispersion $\sigma_{v^\star,p}^{(\tau,s+1)}$ en provenance d'un modèle de démodulateur souple EP, ainsi que les variances extrinsèques lissées $v_p^{d(\tau,s)}$ et leur dispersion $\sigma_{v^d,p}^{(\tau,s)}$ fournies à l'auto-itération précédente,
- pour chaque turbo-itération, appliquer pour l'ensemble de P blocs de données, sur les valeurs prédites du SNR après égalisation avec dispersion de l'auto-itération finale

$$\mathrm{SNR}_{\mathrm{EQ},p}^{(\tau)} = \mathrm{SNR}_{\mathrm{EQ},p}^{(\tau,\mathcal{S}_\tau)},$$

p = 1,...,P, une fonction de compression du SNR afin de prédire une valeur SNR après égalisation $\mathrm{SNR}_{\mathrm{R}}^{(\tau)}$ sur l'ensemble des blocs de données,

- utiliser un modèle de démappage et décodage conjoint des données tenant compte de la valeur du SNR après-égalisation compressé $\mathrm{SNR}_{\mathrm{R}}^{(\tau)}$, de l'information a priori pour le démodulateur souple $I_{A,\mathrm{DEM}}^{(\tau)}$ et d'une éventuelle information a priori pour les décodeurs internes $I_{A,\mathrm{INT}}^{(\tau)}$, qui sont tous les deux fournis par ce modèle lui-même à la précédente turbo-itération, pour obtenir une ou plusieurs métriques caractérisant la performance du récepteur.

L'invention concerne aussi un dispositif pour la mise en oeuvre du procédé selon l'invention.

Le dispositif pour la mise en oeuvre peut être un récepteur, un simulateur ou tout autre dispositif permettant d'exécuter les étapes du procédé selon l'invention.

D'autres caractéristiques, détails et avantages de l'invention ressortiront à la lecture de la description faite en référence aux dessins annexés donnés à titre d'exemple et qui représentent, respectivement :

[Fig.1] une illustration d'un système de télécommunication pour la mise en oeuvre de l'invention,

[Fig.2] un schéma-bloc avec une vue fonctionnelle d'un émetteur mono-antennaire, SISO,

[Fig.3] un schéma de la structure d'un égaliseur avec retour de décision ou DFE (Decision Feedback Equalizer) turbo dans le cas mono-antennaire, pour un système SC-FDMA,

[Fig.4], une vue globale du procédé de prédiction selon l'invention,

[Fig.5], un détail du bloc de modélisation du récepteur,

[Fig.6], une vue générale du procédé de prédiction sans turbo-itération,

[Fig.7], une illustration de la succession des étapes du procédé,

[Fig.8], un exemple d'application pour la simulation,

[Fig.9], une illustration de l'application à un lien,

[Fig.10], une illustration de la LUT du bloc modèle tabulé de démappage et décodage conjoint pour du 8-PSK codé avec le code convolutif de LTE pour un mot de code de 768 bits, en ce qui concerne les sorties $v^{a(\tau)}$ et $\sigma_{v^a}^{(\tau)}$,

[Fig.11] une illustration de la LUT utilisée dans le bloc modèle tabulé du démodulateur EP pour un bloc de données de 128 symboles.

Afin de bien faire comprendre l'objet de l'invention, la description qui suit est donnée à titre illustratif et nullement limitatif pour prédire le comportement d'un récepteur itératif, ce qui permettra, entre autres, d'optimiser ses paramètres. Il est bien entendu que le procédé selon l'invention peut aussi s'appliquer à un récepteur non itératif ou à tout autre dispositif permettant une prédiction.

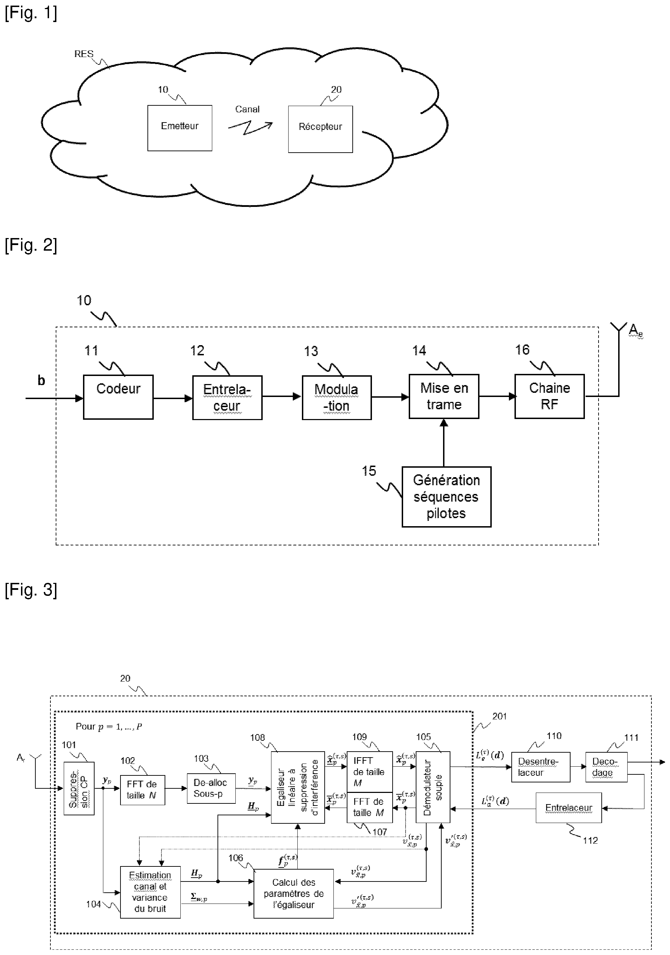

La figure 1 illustre un exemple de système de télécommunications sans fil opérant au sein d'un réseau de télécommunications sans fils RES, comprenant un émetteur 10 avec une ou plusieurs antennes d'émission et un récepteur 20 ayant une ou plusieurs antennes de réception. L'émetteur et le récepteur communiquent en envoyant des signaux sur le canal de communication sans fil. Il n'y a pas de limitation particulière sur le type de réseau, il peut s'agir par exemple d'un réseau cellulaire de type 4G ou 5G, ou d'un réseau de noeuds qui communiquent entre eux directement, comme par exemple dans les réseaux de véhicules ou les réseaux de capteurs. En général, dans le réseau de télécommunications sans fil, plusieurs liens peuvent être actifs en même temps sur les mêmes ressources (temporelles, fréquentielles, spatiales) ou pas. Pour simplifier la description de l'invention on considérera l'un de ces liens. Le système peut être généralisé dans le cas multi-antennaire en intégrant dans le bloc de modélisation un modèle d'égaliseur MIMO (multiple outputs multiple inputs - à entrées et sorties multiples) connu de l'homme du métier.

Par exemple, l'émetteur 10 de la figure 1 peut-être un émetteur mono-antennaire représenté en figure 2. L'émetteur 10 prend en entrée des bits d'information, b, les bits sont codés dans un codeur 11 avec un codeur correcteur d'erreur qui peut être un code convolutif, un turbo-code, ou un code à contrôle de parité à faible densité (Low-Density Parity-Check - LDPC) ou tout autre code pour lequel il existe un algorithme de décodage qui donne des informations souples. Les bits codés sont entrelacés avec un entrelaceur 12. Les bits entrelacés sont ensuite modulés par un modulateur 13. Le modulateur 13 fournit en sortie des symboles tirés d'une constellation $\mathcal{X}$. Les symboles modulés sont transmis à un bloc de mise en trame 14 qui organise les données par blocs dans une trame et qui peut aussi insérer des séquences pilotes qui serviront, par exemple au récepteur, pour l'estimation du canal. Les séquences pilotes sont générées par un générateur de séquences pilotes 15. De plus, le bloc de mise en trame 14 regroupe les symboles en sortie du bloc 14 en $P$ blocs et implémente une méthode de périodisation partielle des blocs de données qui permet, à la réception, d'implémenter un égaliseur dans le domaine fréquentiel. Le signal mis en trame est transmis vers une chaîne radio fréquence RF, 16, pour émission par une antenne Ae.

Le bloc de mise en trame 14 peut utiliser (par bloc de données) une modulation OFDM ou OFDMA avec un total de N sous-porteuses dont M sous-porteuses utilisées avec un préfixe cyclique (Cyclic Prefix - CP) et éventuellement un suffixe cyclique (Cyclic Suffix - CS). Le bloc de mise en trame 14 peut aussi mettre en place une modulation SC-FDMA, avec M le nombre de sous-porteuses utilisées pour le précodage avec une transformée de Fourier discrète (Discrète Fourier Transform - DFT), ou encore une modulation mono-porteuse avec une mise-en-forme spectrale à accès multiple par répartition en fréquence (Spectrally Shaped - Single Carrier - Frequency Division Multiple Access - SS-SC-FDMA), qui devient une modulation mono-porteuse avec une mise-en-forme spectrale (Spectrally Shaped - Single Carrier - SS-SC) si N = M. Dans tous ces cas, le préfixe cyclique CP et éventuellement le suffixe cyclique CS sont utilisés. Les CP et CS peuvent être substitués par une séquence constante (par exemple des zéros, ou des séquences pilotes) ou évoluant d'une trame à l'autre (par exemple par un procédé pseudo-aléatoire connu des utilisateurs), ce qui permet d'obtenir encore un signal avec la bonne propriété de périodicité partielle sur les blocs de données étendus avec l'une de ces séquences.

L'invention s'applique donc à des émetteurs utilisant des constellations complexes comme la modulation d'amplitude en quadrature (Quadrature Amplitude Modulation - QAM), la modulation par changement de phase ou Phase Shift Keying (PSK), la modulation par changement de phase et d'amplitude (Amplitude Phase Shift Keying - APSK) ; des constellations réelles, comme la modulation par changement de phase binaire ou « Binary Phase Shift Keying » (BPSK), ou les modulations en amplitude d'impulsion (Pulse Amplitude Modulation - PAM). La technique peut aussi être appliquée à des constellations tournées périodiquement comme la $\pi/2$-BPSK, où sur les symboles pairs on utilise une constellation BPSK classique {+1, -1} et sur les symboles impairs on utilise une constellation tournée de $\pi/2$ radians {+j, -j}, et plus généralement avec les constellations $\pi/Q$-MPSK, où la rotation périodique est de $\pi/Q$ radians. L'invention peut s'appliquer à tout modulateur 13 sans mémoire.

La figure 3 illustre un schéma fonctionnel du récepteur 20 dans le cas où le signal émis est obtenu avec une technique SC-FDMA avec préfixe cyclique CP. Les notations utilisées sont :

- $\tau$ : indice de la turbo-itération,
- $s$ : indice de l'auto-itération,
- $\boldsymbol{y}_p$ : les observations des échantillons SC-FDMA pour le $p$-ème bloc de données,
- $\underline{\boldsymbol{y}}_p$ : les observations en bande de base dans le domaine fréquentielle pour le $p$-ème bloc de données,
- $\underline{\boldsymbol{h}}_p$ : l'estimée de la réponse fréquentielle du canal, qui a affecté le $p$-ème bloc de données, sur M points ;
- $\underline{\boldsymbol{H}}_p$ : l'estimée du matrice de canal $\underline{\boldsymbol{H}}_p$ =diag($\underline{\boldsymbol{h}}_p$);
- $L_a^{(\tau)}(\boldsymbol{d})$ : LLRs a priori associés à la séquence de bits codés et entrelacés envoyés $\boldsymbol{d}$, en provenance du décodeur à la turbo-itération $\tau$,
- $L_e^{(\tau)}(\boldsymbol{d})$ : LLRs extrinsèques associés à la séquence de bits codés et entrelacés envoyés $\boldsymbol{d}$, en provenance du démodulateur souple à la turbo-itération $\tau$,
- $\underline{\Sigma}_{w,p}$ : la matrice de covariance du bruit dans le domaine fréquentiel pour le $p$-ème bloc de données,
- $p$ : l'identifiant entier des blocs de données (entre 1 et $P$),
- $P$ : le nombre de bloc de données transmises,
- $s$ : l'identifiant entier de l'auto-itération (entre 0 et $\mathcal{S}_\tau$),

8

- $\mathcal{S}_\tau$ : le nombre d'auto-itérations du récepteur (nombre entier égal ou supérieur à zéro) pour la $\tau$-ième turbo-itération,

- $\tau$ : l'identifiant entier de la turbo-itération (entre 0 et $\mathcal{T}$),

- $\mathcal{T}$ : le nombre de turbo-itérations du récepteur (nombre entier égal ou supérieur à zéro),

- $v_{\bar{x},p}^{(\tau,s)}$ : la fiabilité globale de l'estimation $\overline{x}_p^{(\tau,s)}$ pour le $p$-ème bloc de données, à l'auto-itération $s$ et la turbo-itération $\tau$,

- $v_{\hat{x},p}^{\prime(\tau,s)}$ : la fiabilité globale de l'estimation $\widehat{x}_p^{(\tau,s)}$ pour le $p$-ème bloc de données, à l'auto-itération $s$ et la turbo-itération $\tau$,

- $\mathcal{X}$ : la constellation des symboles,

- $q$ : le nombre de bits par symbole, i.e. $q = \log_2 |\mathcal{X}|$,

- $\overline{x}_p^{(\tau,s)}$ : l'estimation des symboles transmis $\boldsymbol{x}_p$ pour le $p$-ème bloc de données, à l'auto-itération s et la turbo-itération $\tau$, fournie par le démodulateur,

- $\widehat{x}_p^{(\tau,s)}$ : l'estimation du symbole transmis $\boldsymbol{x}_p$ pour le $p$-ème bloc de données, à l'auto-itération $s$ et la turbo-itération $\tau$, fournie par l'égaliseur adaptatif à suppression d'interférence.

Les adaptations du récepteur pour les autres systèmes mentionnés ci-avant (OFDM, OFDMA, SS-SC-FDMA, SC, SC-SS) avec éventuellement d'autres techniques d'extension périodique du signal sont connues de l'homme de l'art (par exemple en utilisant des séquences pilotes ou des séquences de zéros comme dans la publication de B. Muquet, Zhengdao Wang, G. B. Giannakis, et al. « Cyclic prefixing or zéro padding for wireless multicarrier transmissions? » In: IEEE Transactions on Communications 50.12 (Dec. 2002), pp. 2136-2148).

On suppose ici que le signal de l'émetteur est synchronisé au récepteur avec une précision adéquate (i.e. inférieure à la durée du préfixe cyclique CP, si ce dernier est présent) et qu'un algorithme de synchronisation a fourni l'instant de synchronisation au récepteur. Le signal fourni en entrée au bloc 101 est donc déjà synchronisé en temps et en fréquence et à la bonne fréquence d'échantillonnage. De plus, le signal en entrée au bloc 101 concerne la partie de signal qui contient le $p$-ème bloc de données et les séquences pilotes qui sont utiles à l'estimation de canal pour les données de ce même bloc (le démultiplexage de la trame a déjà été effectué). Comme illustré dans la figure 3, le récepteur 20 traite d'abord séparément les $P$ parties de signal reçu qui contiennent un bloc de données (encadré interne en pointillé dénoté 201 en figure 3) : il s'agit des traitements d'estimation de canal, d'égalisation et de démodulation souple. Puis, les sorties du démodulateur souple concernant les $P$ blocs de données sont concaténées et traitées ensemble par les blocs de désentrelacement 110, de décodage 111 et d'entrelacement 112, puisque ces traitements opèrent sur le mot de code global envoyé par l'émetteur. Le récepteur 20 contient deux boucles de rétroaction. La première boucle est positionnée entre l'égaliseur 108 et le démodulateur souple 105 et elle est réalisée pour chaque bloc de données $p$. Dans la suite, le parcours de cette boucle est appelé « auto-itération » et un égaliseur qui utilise cette boucle est un « égaliseur auto-itéré ». La deuxième boucle se situe entre le démodulateur souple 105 et le décodeur bloc « décodage » 111, elle est réalisée pour le mot de code entier. Dans la suite, le parcours de cette boucle est désigné sous l'expression « turbo-itération » et un égaliseur qui utilise cette boucle est un « égaliseur turbo-itéré » ou un « turbo-égaliseur ». Le récepteur 20 effectue un nombre $\mathcal{T} \geq 0$ de turbo-itérations. Pour chaque turbo-itération donnée $\tau = 0, \dots, \mathcal{T}$, le récepteur effectue un nombre

$$\mathcal{S}_\tau \geq 0$$

d'auto-itérations. L'identifiant de l'auto-itération courante sera noté

$$s = 0, \dots, \mathcal{S}_\tau.$$

Il est possible de configurer le récepteur avec la suite

$$\{\mathcal{T}, \mathcal{S}_0, ..., \mathcal{S}_{\mathcal{T}}\},$$

soit au début de la réception du signal, soit de manière dynamique pendant le traitement du signal. La configuration

$$\{\mathcal{T} = 0, \mathcal{S}_0 > 0\}$$

décrit un égaliseur auto-itéré, de type DFE, qui est typiquement utilisé avec des informations a priori nulles au niveau du démodulateur souple, puisqu'il n'y a pas de boucle avec le bloc « décodage » 111. Les nombres d'auto-itérations ou de turbo-itérations règlent le compromis entre performances, complexité de calcul et mémoire nécessaire, au sein du récepteur.

Après avoir extrait le signal contenant le p-ème bloc de données en provenance de l'antenne de réception $A_r$ du récepteur 20, à travers la suppression du CP dans le cas des systèmes SC avec CP ou du SC-FDMA, 101, le bloc de données est transformé dans le domaine fréquentiel en passant par une transformation de Fourier rapide 102 (Fast Fourier Transform - FFT) de taille $N$ (passage dans le domaine fréquentiel). Le signal en sortie de la FFT passe ensuite dans un bloc « De-alloc sous-p » 103 qui permet d'accéder aux $M$ ressources fréquentielles (sous-porteuses) parmi $N$, à travers lesquelles (ressources utilisées pour la transmission du signal) le signal a été transmis. Ce bloc sélectionne uniquement les sous-porteuses sur lesquelles le signal a été transmis (dé-allocation des sous-porteuses), et en sortie de ce dernier bloc de dé-allocation 103 le signal est représenté par un vecteur $\underline{y}_p$ de taille $M$, regroupant les sous-porteuses utilisées. En parallèle, les séquences pilotes sont extraites des signaux provenant de l'antenne de réception $A_r$ et envoyées dans le bloc « Estimation des canaux et de la variance du bruit » 104. Elles sont utilisées pour calculer une estimation de la réponse fréquentielle du canal entre l'émetteur et le récepteur, sur les $M$ sous-porteuses d'intérêts (celles utilisées par l'utilisateur pour envoyer l'information). La réponse fréquentielle du canal entre l'émetteur et le récepteur est organisé dans un vecteur $\underline{h}_p$ de taille $M$, ou de façon équivalente, dans une matrice diagonale $\underline{H}_p = \mathrm{diag}(\underline{h}_p)$ de taille $M \times M$. Le bloc « Estimation des canaux et de la variance du bruit » 104 fournit aussi une estimation de la variance du bruit. Ce bruit contient la contribution du bruit thermique sur l'antenne de réception $A_r$ et d'éventuelles interférences dues à plusieurs effets parasites en provenance, soit de traitements numériques, soit d'autres signaux extérieurs. Le bloc « Estimation des canaux et de la variance du bruit » fournit la matrice de covariance du bruit dans le domaine fréquentiel $\underline{\Sigma}_{w,p}$. Typiquement, on a une estimation de canal et de covariance du bruit par bloc de données $p$.

A la toute première activation de la phase d'initialisation ($\tau = 0$) l'information a priori en provenance du bloc entrelaceur 112 (c'est-à-dire du bloc décodage 111) correspond par convention à un vecteur de zéros. Ainsi, l'estimation souple $\overline{\boldsymbol{x}}_p$ en sortie du démodulateur souple 105 sera un vecteur nul et sa fiabilité $v_{\bar{x},p}^{(\tau,s)}$ est égale à $\sigma_x^2$, où $\sigma_x^2$ est l'énergie moyenne des symboles des constellations d'origine de l'utilisateur. L'estimation souple $\overline{\boldsymbol{x}}$ et sa fiabilité corres-pondante $v_{\bar{x},p}^{(\tau,s)}$ ainsi initialisées sont envoyées respectivement à l'égaliseur 108 et au bloc « calcul des paramètres de l'égaliseur » 106. Ce bloc 106 prend aussi en entrée l'estimation du canal $\underline{H}_p$ et l'estimation de la matrice de covariance du bruit. Dans le cas plus général, le bloc 106 fournit en sortie à chaque auto-itération $s$ et turbo-itération $\tau$ les coefficients de l'égaliseur $\underline{\boldsymbol{f}}_p^{(\tau,s)}$ de taille $M$ dans le domaine fréquentiel. Le bloc est en général un turbo-égaliseur linéaire MMSE auto-itéré avec retour EP. Dans tous les cas, le bloc de calcul 106 fournit aussi en sortie une estimation du bruit après égalisation $v_{\hat{x},p}^{\prime(\tau,s)}$, pour chaque bloc de données, calculée sous l'hypothèse de bruit gaussien et avec le modèle additif $\hat{\boldsymbol{x}}_p^{(\tau,s)} = \boldsymbol{x}_p + \boldsymbol{v}_p^{(\tau,s)}$, avec $\mathrm{Cov}\left[\boldsymbol{v}_p^{(\tau,s)}\right] = v_{\hat{x},p}^{\prime(\tau,s)} \boldsymbol{I}_M$. Ces deux sorties (filtre en domaine fréquentiel et variance du bruit résiduel) sont calculées de la façon suivante :

$$\xi_p^{(\tau,s)} = \frac{1}{M} \sum_{m=0}^{M-1} \frac{\left|\underline{h}_{m,p}\right|^2}{1/\mathrm{SNR}_p + v_{\bar{x},p}^{(\tau,s)} \left|\underline{h}_{m,p}\right|^2}, \qquad (1)$$

$$\underline{f}_{m,p}^{(\tau,s)} = \frac{1}{\xi_p^{(\tau,s)}} \frac{\underline{h}_{m,p}}{1/\mathrm{SNR}_p + v_{\hat{x},p}^{(\tau,s)} \left|\underline{h}_{m,p}\right|^2}, \quad m = 0, \dots, M-1, \qquad (2)$$

$$v_{\hat{x},p}^{\prime(\tau,s)} = \frac{1}{\xi_p^{(\tau,s)}} - v_{\bar{x},p}^{(\tau,s)}, \qquad (3)$$

où $\xi_p^{(\tau,s)}$ est le biais de l'égaliseur fréquentiel MMSE et $\mathrm{SNR}_p$ est la valeur du rapport signal sur bruit moyen avant égalisation (cela coïncide avec l'inverse des covariances sur la diagonale de la matrice $\underline{\Sigma}_{w,p}$ lorsque cette matrice est multiple de l'identité), $\underline{f}_{m,p}^{(\tau,s)}$ sont les coefficients du filtre $\underline{\boldsymbol{f}}_p^{(\tau,s)}$.

Le vecteur de signal reçu $\underline{\boldsymbol{y}}_p$ de taille M est passé dans le bloc « égaliseur linéaire à suppression d'interférence » 108 qui prend aussi en entrée les coefficients du filtre de l'égaliseur $\underline{\boldsymbol{f}}_p^{(\tau,s)}$, la réponse fréquentielle du canal $\underline{\boldsymbol{H}}_p$ et le vecteur de taille M d'estimations souples des symboles émis dans le domaine fréquentiel $\overline{\boldsymbol{x}}_p^{(\tau,s)}$, ce dernier est généré par le bloc de FFT normalisé de taille M, 107, à partir du vecteur de taille M d'estimations souples dans le domaine temporel $\overline{\boldsymbol{x}}_p^{(\tau,s)}$ en provenance du démodulateur souple 105. La fiabilité globale de cette estimation est représentée par la valeur $v_{\bar{x},p}^{(\tau,s)}$ ; plus elle est proche de zéro plus la fiabilité est grande ( $v_{\bar{x},p}^{(\tau,s)}$ est une variance). Le bloc égaliseur linéaire à suppression d'interférence 108 réalise la suppression d'interférences (Interférence Cancellation - IC), notamment de l'interférence entre symboles ou ISI (Inter Symbol Interférence). Le bloc égaliseur linéaire à suppression d'interférence 108 produit un vecteur $\widehat{\underline{\boldsymbol{x}}}_p^{(\tau,s)}$ de taille M qui représente une estimation des symboles dans le domaine fréquentiel, avec :

$$\widehat{\underline{\boldsymbol{x}}}_p^{(\tau,s)} = \overline{\underline{\boldsymbol{x}}}_p^{(\tau,s)} + \underline{\boldsymbol{f}}_p^{(\tau,s)} \odot \left( \underline{\boldsymbol{y}} - \underline{\boldsymbol{h}}_p \odot \overline{\underline{\boldsymbol{x}}}_p^{(\tau,s)} \right) \qquad (4)$$

où $\odot$ indique la multiplication entrée par entrée de deux vecteurs. Le vecteur $\widehat{\underline{\boldsymbol{x}}}_p^{(\tau,s)}$ est ensuite repassé dans le domaine temporel à travers une transformée inverse de Fourier (inverse Fourier transform - IFFT) 109 normalisée de taille M, pour obtenir le vecteur $\widehat{\boldsymbol{x}}_p^{(\tau,s)}$ du signal temporel égalisé, qui est envoyé au démodulateur souple 105.

A partir de $\widehat{\boldsymbol{x}}_p^{(\tau,s)}$ de la variance du bruit après égalisation $v_{\hat{x},p}^{\prime(\tau,s)}$ et des informations souples a priori, par exemple sous la forme de métriques en rapport de vraisemblance logarithmique (Log-Likelihood Ratio - LLRs) $L_a^{(\tau)}(\boldsymbol{d})$ en provenance du décodeur, le démodulateur souple produit des informations souples pour chaque bit du signal d'entrée, par exemple sous la forme de LLRs extrinsèques $L_{e,p}^{(\tau)}(\boldsymbol{d})$. Les LLRs extrinsèques correspondants aux P blocs de données sont ensuite concaténés pour former les LLRs extrinsèques $L_e^{(\tau)}(\boldsymbol{d})$ correspondants au mot de code entier envoyé. Le démodulateur souple 105 prend des formes différentes selon la statistique du signal après égalisation : par exemple, si la constellation de départ est une QAM de forme carrée on peut utiliser un démodulateur pour des statistiques gaussiennes complexes symétriques, autrement, si la constellation est réelle, il est possible d'utiliser un démodulateur pour des statistiques gaussiennes avec pseudo-covariance non nulle.

Le démodulateur souple 105 calcule les estimations souples dans le domaine temporel $\overline{x}_p^{(\tau,s)}$ et leurs fiabilités $v_{\overline{x},p}^{(\tau,s)}$ avec une méthode basée sur la propagation de l'espérance EP. En général, le bloc 105, à la turbo-itération $\tau$ et à l'auto-itération s calcule les sorties $\overline{x}_{m,p}^{(\tau,s+1)}$ et $v_{\overline{x},p}^{(\tau,s+1)}$ à utiliser à l'auto-itération suivante $s + 1$. Ces valeurs sont obtenues par une opération de lissage adaptatif comme suit :

$$\overline{x}_{m,p}^{(\tau,s+1)} = \left(1 - \beta_p^{(\tau,s)}\right)\overline{x}_{m,p}^{\star(\tau,s+1)} + \beta_p^{(\tau,s)}\,\overline{x}_{m,p}^{(\tau,s)}\,, \qquad (5)$$

$$v_{\overline{x},p}^{(\tau,s+1)} = \left(1 - \beta_p^{(\tau,s)}\right)v_{\overline{x},p}^{\star(\tau,s+1)} + \beta_p^{(\tau,s)}\,v_{\overline{x},p}^{(\tau,s)}\,. \qquad (6)$$

Les coefficients $\beta^{(\tau,s)}$ sont toujours compris entre 0 et 1. Quand ils sont proches de zéro, les estimations courantes $\overline{x}_{m,p}^{\star(\tau,s+1)}$ et $v_{\overline{x},p}^{\star(\tau,s+1)}$ obtenues par une opération dite de « division gaussienne » ont plus de poids, quand les coefficients $\beta_p^{(\tau,s)}$ sont proches de « un » les estimations de l'auto-itération précédente ont plus de poids. Les estimations extrinsèques des symboles émis $\overline{x}_{m,p}^{\star(\tau,s+1)}$ et la variance extrinsèque moyenne $v_{\overline{x},p}^{\star(\tau,s+1)}$ sont obtenues par la « division gaussienne » comme suit :

$$\overline{x}_{m,p}^{\star(\tau,s+1)} = \frac{\mu_{m,p}^{(\tau,s)} v_{\hat{x},p}^{\prime(\tau,s)} - \hat{x}_{m,p}^{(\tau,s)} \overline{\gamma}_p^{(\tau,s)}}{v_{\hat{x},p}^{\prime(\tau,s)} - \overline{\gamma}_p^{(\tau,s)}}\,, \quad m = 0,\dots,M-1 \qquad (7)$$

$$v_{\overline{x},p}^{\star(\tau,s+1)} = \frac{v_{\hat{x},p}^{\prime(\tau,s)} \overline{\gamma}_p^{(\tau,s)}}{v_{\hat{x},p}^{\prime(\tau,s)} - \overline{\gamma}_p^{(\tau,s)}}\,, \qquad (8)$$

où $\hat{x}_{m,p}^{(\tau,s)}$ est l'estimation temporelle du signal (du bloc de données p) en sortie de l'égaliseur et $v_{\hat{x},p}^{\prime(\tau,s)}$ est la variance du bruit équivalent gaussien en sortie de l'égaliseur (et donc une mesure de fiabilité de $\hat{x}_{m,p}^{(\tau,s)}$ ) ; $\mu_{m,p}^{(\tau,s)} = E_{\mathcal{D}_{m,p}^{(\tau,s)}}\left[x_{m,p}\right]$ sont les estimations a posteriori des symboles émis et $\overline{\gamma}_p^{(\tau,s)} = \frac{1}{M}\sum_{m=1}^{M} Var_{\mathcal{D}_{m,p}^{(\tau,s)}}\left[x_{m,p}\right]$ leur variance moyenne a posteriori. Ces dernières quantités sont calculées par le bloc 105 à partir de la distribution a posteriori des symboles $\mathcal{D}_{m,p}^{(\tau,s)}$ qui est obtenue pour tout $\alpha \in \mathcal{X}$ avec :

$$d_{m,p}^{(\tau,s)}(\alpha) = \mathcal{L}_{m,p}^{(\tau,s)}\left(\hat{x}_{m,p}^{(\tau,s)}|\alpha\right)\mathcal{P}_{m,p}^{(\tau)}(\alpha), \qquad (9)$$

$$\mathcal{D}_{m,p}^{(\tau,s)}(\alpha) = n_{d,m,p}^{-1}\, d_{m,p}^{(\tau,s)}(\alpha), \quad avec \quad n_{d,m} = \sum_{\alpha \in \mathcal{X}} d_{m,p}^{(\tau,s)}(\alpha), \tag{10}$$

en utilisant les vraisemblances gaussiennes calculées à partir des observations égalisées $\hat{x}_{m,p}^{(\tau,s)}$ et qui ont la forme

$$\mathcal{L}_{m,p}^{(\tau,s)}\left(\hat{x}_{m,p}^{(\tau,s)}|\alpha\right) = \exp\left(-\left|\hat{x}_{m,p}^{(\tau,s)} - \alpha\right|^2 / v_{\hat{x},p}^{\prime(\tau,s)}\right)$$ pour des gaussiennes complexes symétriques.

$$\mathcal{P}_{m,p}^{(\tau)}(\alpha)$$

est la distribution a priori des symboles envoyés du p-ème bloc de données, dérivée grâce aux LLRs en provenance du décodeur (si ces valeurs sont non-nulles) selon les formules suivantes, pour tout $\alpha \in \mathcal{X}$ :

$$p_{m,p}^{(\tau)}(\alpha) = \prod_{j=0}^{q-1} \exp\left(-\mathcal{M}_j^{-1}(\alpha)L_a^{(\tau)}(d_{(p-1)P+qm+j})\right) \tag{11}$$

$$\mathcal{P}_{m,p}^{(\tau)}(\alpha) = n_{p,m,p}^{-1}\, p_{m,p}^{(\tau)}(\alpha), \quad \text{avec} \quad n_{p,m,p} = \sum_{\alpha \in \mathcal{X}} p_{m,p}^{(\tau)}(\alpha). \tag{12}$$

Au début de chaque nouvelle turbo-itération le récepteur doit être initialisé avant d'entamer les auto-itérations

$$s = 0, \ldots, \mathcal{S}.$$

Lors de l'initialisation du récepteur, dénotée en posant conventionnellement $s = -1$, le signal de retour du démodulateur souple 105 vers l'égaliseur 108 est calculé. Nous posons $\hat{x}_{m,p}^{(\tau,-1)} = 0$, pour tout $m$, et $v_{\hat{x},p}^{\prime(\tau,-1)} = +\infty$, ce qui rend la vraisemblance $\mathcal{L}_{m,p}^{(\tau,-1)}\left(\hat{x}_{m,p}^{(\tau,-1)}|\alpha\right)$ non-informative, et $\mathcal{D}_{m,p}^{(\tau,-1)}(\alpha) = \mathcal{P}_{m,p}^{(\tau)}(\alpha)$. A Dans ce cas, la sortie de l'équation (8) est notée

$$v^{a(\tau)} = \frac{1}{MP} \sum_{p=1}^{P} \sum_{m=1}^{M} Var_{\mathcal{P}_{m,p}^{(\tau)}}\left[x_{m,p}\right],$$

pour désigner la variance a priori de l'estimée souple du signal sur tout le mot de code, dérivée grâce aux LLRs a priori en provenance du décodeur. Dans ce cas, avec $v_{\hat{x},p}^{(\tau,-1)} = 0$, $\beta_p^{(\tau,-1)} = 0$ l'équation (6), c'est-à-dire la fiabilité en sortie du démodulateur souple 105, donne $v_{\hat{x},p}^{(\tau,0)} = v^{a(\tau)}$, indépendant du bloc $p$ qui est la fiabilité obtenue en se basant uniquement sur le retour du décodeur 111. Et donc, pour bien distinguer les apports de la « division gaussienne » pour $s \geq 0$, la sortie de l'équation (6) est notée $v_p^{d(\tau,s)}$ et contiendra aussi les apports du démodulateur souple.

Dans le cas $v_{\hat{x},p}^{\prime(\tau,s)} \leq \bar{\gamma}_p^{(\tau,s)}$, l'équation (8) donnerait une variance négative, ce qui n'a pas de sens puisqu'une variance est par définition une quantité positive. Nous interprétons cette variance négative comme le signe que les informations a posteriori calculées par le démodulateur souple et les informations en provenance des observations (c'est-à-dire de l'égaliseur) sont en contradiction mutuelle. Pour résoudre ce problème, les sorties de la division gaussienne sont calculées ainsi :

$$\bar{x}_{m,p}^{\star(\tau,s+1)} = \mu_{m,p}^{(\tau,s)}, \qquad \text{pour} \quad v_{\hat{x},p}^{\prime(\tau,s)} \leq \bar{\gamma}_p^{(\tau,s)} + \varepsilon , \quad m = 0, \ldots, M-1 \qquad (13)$$

$$v_{\bar{x},p}^{\star(\tau,s+1)} = \bar{\gamma}^{(\tau,s)}, \qquad \text{pour} \quad v_{\hat{x},p}^{\prime(\tau,s)} \leq \bar{\gamma}_p^{(\tau,s)} + \varepsilon, \qquad (14)$$

avec $\varepsilon \geq 0$ une constante permettant de s'écarter de l'instabilité numérique. Des valeurs de l'ordre de $\varepsilon = 10^{-3}$ ou $10^{-4}$ permettent d'améliorer les performances, sur les rares occurrences de blocs reçus où $\bar{\gamma}_p^{(\tau,s)}$ est proche numériquement de $v_{\hat{x},p}^{\prime(\tau,s)}$ .

Pour bien distinguer la fonctionnalité du démodulateur souple qui calcule les LLRs extrinsèques de la fonctionnalité qui fournit le retour souple, nous utilisons le terme « démappage » pour le calcul des LLRs, et le terme « démodulation » pour le calcul du retour souple.

Le démodulateur souple 105 calcule selon l'une des méthodes connues de l'homme de l'art les LLRs extrinsèques associés à chaque bloc de données, qui sont ensuite concaténés ensemble dans le vecteur $L_e^{(\tau)}(\boldsymbol{d})$ qui rassemble les LLRs entrelacés des bits codés du mot de code entier, et sont ensuite désentrelacés par le bloc désentrelaceur 110 qui est le bloc inverse du bloc entrelaceur 112. Ensuite, les métriques souples sont envoyées au décodeur 111 qui génère des estimations de probabilités des bits d'informations envoyés (par exemple des probabilités a posteriori). Ces estimations de probabilités peuvent être utilisées pour obtenir des estimations « dures » $\boldsymbol{b'}$ des bits transmis $\boldsymbol{b}$ par le moyen d'un détecteur à seuil. Si le récepteur utilise des turbo-itérations, le décodeur produit aussi des estimations des bits codés envoyés, c'est-à-dire des probabilités extrinsèques (EXT), par exemple sous forme de LLRs, qui mesurent la probabilité que les bits codés envoyés soient « 0 » ou « 1 ». Les probabilités extrinsèques EXT sont ensuite envoyées à l'entrelaceur 112 pour être entrelacées. L'entrelaceur 112 situé dans le récepteur 20 opère de la même manière que l'entrelaceur 12 se trouvant dans l'émetteur 10, avec la seule différence que ce dernier opère sur des données binaires, alors que l'entrelaceur 112 opère sur des LLRs. Les probabilités extrinsèques EXT entrelacées deviennent des informations a priori du point de vue du reste du récepteur, par exemple sous forme de LLRs a priori $L_a^{(\tau,s)}(\boldsymbol{d})$ et entrent dans le démodulateur souple 105.

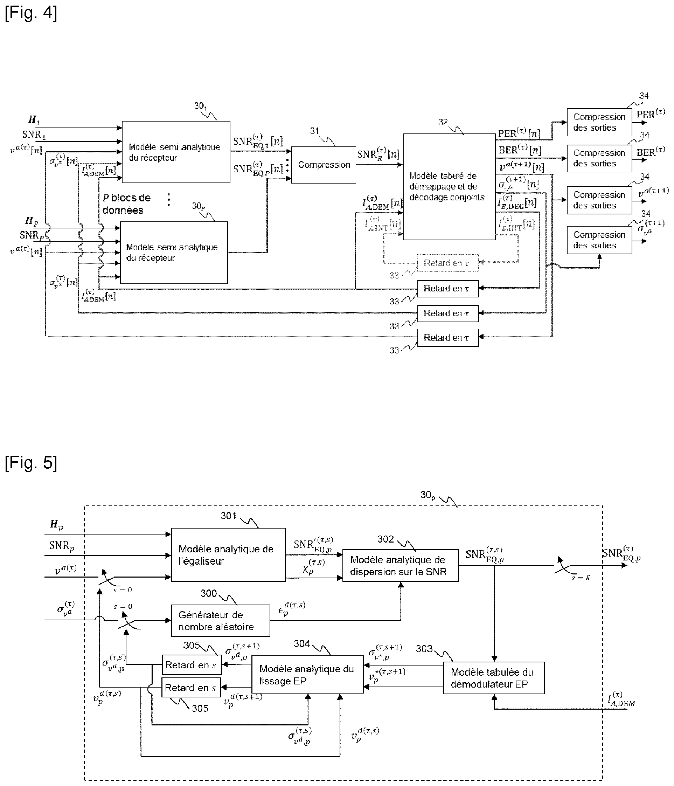

Le procédé de prédiction de performances du récepteur exploite des fonctions semi-analytiques et des fonctions tabulées qui sont décrites en relation avec les figures 4, 5 et 6.

La figure 4 illustre de manière globale les modules et les étapes mis en oeuvre par le procédé de prédiction selon l'invention.

Les notations suivantes sont utilisées :

- $n$: l'indice de la réalisation des quantités en fonction du générateur pseudo-aléatoire qui se trouve dans les blocs « Modèle semi-analytique du récepteur », avec $n = 1, \ldots, N_{try}$
- $\tau$: l'indice de la turbo-itération,
- $H_p$ : la réalisation du canal sur le bloc de données p,
- $SNR_p$: le rapport signal-sur-bruit sur le bloc de données p,
- $SNR_{EQ,p}^{(\tau)}[n]$ : *nième* réalisation du rapport signal-sur-bruit après égalisation avec dispersion sur le bloc de données $p$ à la turbo-itération $\tau$,
- $SNR_R^{(\tau)}[n]$ : *nième* réalisation du SNR équivalent du mot de code (après compression) à la turbo-itération $\tau$,
- $I_{A,DEM}^{(\tau)}[n]$ : *nième* réalisation de l'information a priori fournie par le décodeur vers le démodulateur à la turbo-itération $\tau$,

- $I_{E,DEC}^{(\tau)}[n]$ : *nième* réalisation de l'information extrinsèque du décodeur à la turbo-itération $\tau$,

- $I_{A,INT}^{(\tau)}[n]$ : *nième* réalisation de l'information a priori interne fournie par le décodeur vers le décodeur à la turbo-itération $\tau$,

- $I_{E,INT}^{(\tau)}[n]$ : *nième* réalisation de l'information extrinsèque interne fournie par le décodeur vers le décodeur à la turbo-itération $\tau$,

- v^{a(τ)}[n]: *nième* réalisation de la variance a priori fournie par le décodeur + soft mapper à la turbo-itération $\tau$,

- $\sigma_{v^a}^{(\tau)}[n]$ : *nième* réalisation de la dispersion (= déviation standard) de la variance a priori à la turbo-itération $\tau$.

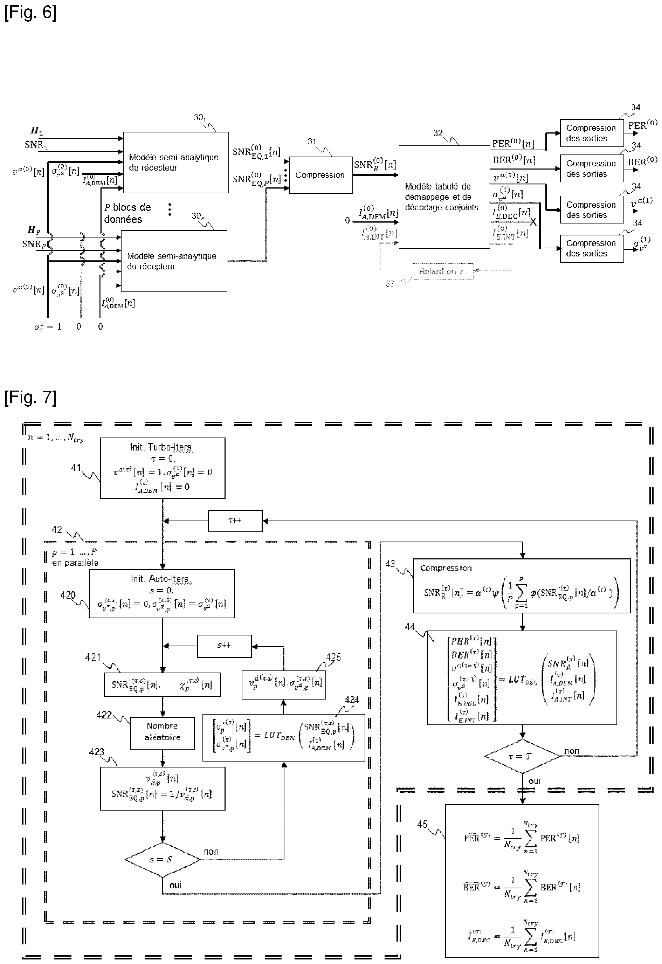

Le dispositif de prédiction selon l'invention calcule $N_{try}$ réalisations des quantités que l'on souhaite prédire, indiquées par la notation « [$n$] » dans la figure 4. Toutes ces réalisations dépendent, de façon directe ou indirecte, des réalisations de la dispersion qui sont générées par des générateurs pseudo-aléatoires présents à l'intérieur des blocs « Modèle semi-analytique du récepteur » $30_p$, $p = 1, ..., P$. Pour ne pas alourdir la description de la figure 6, dans la suite la dépendance explicite de « [$n$] » n'est pas indiqué dans la notation, là où cela ne crée pas d'ambiguïté dans le texte.

Le dispositif de prédiction selon l'invention comprend plusieurs blocs $30_p$ de modélisation semi-analytique du récepteur, pour modéliser la détection des blocs de données pour $p = 1, ..., P$, qui peuvent par exemple être réalisés en parallèle, et leurs sorties sont reliées à un module de compression 31, lui-même relié à un deuxième module 32, ou module de démappage et de décodage conjoints. Dans le cas d'un récepteur avec décodage itératif, comme sur la figure 4, ce module 32 est rebouclé vers les modules $30_p$, en passant par des blocs de retard en turbo-itération, sinon ces modules restent déconnectés, comme sur la figure 6. Puisque le récepteur n'utilise pas de turbo-itération, l'index $\tau$ est fixé égal à 0 dans cette figure 4.

Le premier bloc de modélisation semi-analytique $30_p$ prend en entrée au moins la réalisation du canal $\mathbf{H}_p$ sur le bloc de données p et la valeur de rapport signal sur bruit $SNR_p$ sur le bloc de données p. Nous notons ici que dans une application de prédiction des performances dans le cadre du fonctionnement réel d'un système de télécommunication (par exemple prédiction en vue d'une adaptation dynamique de lien), $\mathbf{H}_p$ et $SNR_p$ sont des estimées fournies par le récepteur. Dans l'utilisation de la prédiction à l'intérieur d'un simulateur système, ces valeurs sont fournies par le simulateur lui-même.

Dans le cas du récepteur itératif, le premier bloc de modélisation semi-analytique 30p reçoit aussi en entrée la valeur de la variance a priori v^{a(τ)}, la dispersion de la variance a priori $\sigma_{v^a}^{(\tau)}$, et l'information a priori pour le démodulateur $I_{A,DEM}^{(\tau)}$ toutes les trois fournies par le bloc « modèle tabulé de démappage et de décodage conjoints » 32. Dans le cas non-itératif, ces entrées sont figées à des valeurs d'initialisation, comme indiqué sur la figure 6, avec

$$v^{a(\tau)} = \sigma_x^2 = 1, \quad \sigma_{v^a}^{(\tau)} = 0 \text{ et } I_{A,DEM}^{(\tau)} = 0 .$$

Le bloc de modélisation $30_p$ utilise la dispersion de la variance a priori $\sigma_{v^a}^{(\tau)}$ en provenance du bloc 32 pour prendre en compte les effets d'un bloc à taille finie.

Le bloc de modélisation semi-analytique du récepteur $30_p$, qui modélise le comportement de l'égaliseur et d'une partie du démodulateur souple, modélise séparément la réception de chaque bloc de données *p*. Pour cela, le système peut comporter *P* blocs de modélisation, si le signal est composé de *P* blocs de données. Chaque bloc prend en entrée la réalisation de canal $\mathbf{H}_p$ expérimentée par le bloc *p* du signal (et supposée connue), la variance du bruit avant égalisation (ou de façon équivalente du rapport signal sur bruit moyen avant égalisation $SNR_p$) en provenance du bloc qui estime/modélise le canal, et en plus la variance des symboles souples a priori v^{a(τ)} (qui correspond à la moyenne de la densité de probabilité de la variance souple instantanée sur tous les blocs, i.e. sur *MP* symboles) en provenance du décodeur (plus précisément issue du décodage de la turbo-itération précédente), la dispersion de la variance des symboles souples a priori $\sigma_{v^a}^{(\tau)}$ (qui correspond à la déviation standard de la densité de probabilité de la variance souple instantanée des blocs de *MP* symboles) issue du décodage de la turbo-itération précédente, ainsi que $I_{A,DEM}^{(\tau)}$ l'information a priori du démodulateur qui coïncide avec l'information extrinsèque fournie par le décodeur issue du décodage de la turbo-itération précédente (dans la figure 4 est inséré un bloc « retard en $\tau$ » 33 qui fait fonction de buffer) tel que

$I_{A,\mathrm{DEM}}^{(\tau)} = I_{E,\mathrm{DEC}}^{(\tau-1)}$ . Ces trois quantités, $v^{a(\tau)}$, $\sigma_{v^a}^{(\tau)}$, $I_{A,\mathrm{DEM}}^{(\tau)}$ proviennent toutes du modèle tabulé de démappage et décodage conjoints 32. Ce premier bloc génère en sortie le SNR après égalisation avec dispersion $\mathrm{SNR}_{\mathrm{EQ},p}^{(\tau)}$ sur le bloc p de données reçu (qui correspondent à la valeur du SNR à la dernière auto-itération, i.e.

$$\mathrm{SNR}_{\mathrm{EQ},p}^{(\tau)} = \mathrm{SNR}_{\mathrm{EQ},p}^{(\tau,s=S)}).$$

L'implémentation de P blocs en parallèle permet d'augmenter la vitesse de traitement des données.

La sortie du premier bloc de modélisation semi-analytique est reliée à un bloc de compression 31 qui prend en entrée les valeurs des SNR après égalisation avec dispersion $\mathrm{SNR}_{\mathrm{EQ},p}^{(\tau)}$ sur tous les blocs de données p reçus qui sont associées au mot de code envoyé avec p = 1, ..., P, et génère en sortie $\mathrm{SNR}_{R}^{(\tau)}$, le SNR équivalent du mot de code (après compression).

La sortie du bloc de compression 31 est reliée au bloc « modèle tabulé de démappage et de décodage conjoints » 32. Ce deuxième bloc de modélisation prend en entrée le SNR équivalent $\mathrm{SNR}_{R}^{(\tau)}$ du mot de code en provenance du bloc de compression 31, l'information a priori du démappage souple $I_{A,\mathrm{DEM}}^{(\tau)}$ et optionnellement, seulement pour les décodeurs qui en ont besoin, comme les turbo décodeurs ou les décodeurs LDPC, l'information a priori interne du

décodeur $I_{A,\mathrm{INT}}^{(\tau)}$ à la turbo-itération précédente, et il fournit en sortie, pour la turbo-itération courante :

- une réalisation de l'estimée du taux d'erreur paquet PER$^{(\tau)}[n]$, et/ou
- une réalisation de l'estimée taux d'erreur bit correspondant BER$^{(\tau)}[n]$, et/ou
- une réalisation de l'estimée de la valeur moyenne de la variance des symboles souples a priori $v^{a(\tau+1)}[n]$ du démappage et de décodage conjoints à utiliser à la prochaine turbo-itération (d'où l'index $\tau + 1$), et/ou

- une réalisation de l'estimée la déviation standard de la variance des symboles souples a priori $\sigma_{v^a}^{(\tau+1)}[n]$, appelée dispersion, à utiliser à la prochaine turbo-itération (d'où l'index $\tau + 1$), et/ou

- une réalisation de l'estimée de l'information extrinsèque du décodeur $I_{E,\mathrm{DEC}}^{(\tau)}[n]$ ;
- pour les décodeurs qui en ont besoin, une réalisation de l'estimée de l'information extrinsèque interne du décodeur

$I_{E,\mathrm{INT}}^{(\tau)}[n]$ .

Les sorties $v^{a(\tau+1)}[n]$ et $\sigma_{v^a}^{(\tau+1)}[n]$ utilisent une convention différente des autres sorties pour l'index $\tau$. Cela est une écriture mathématique formelle qui est nécessaire parce que les variables avant et après les blocs de « retard en $\tau$ » 33 ont le même nom.

Les sorties du bloc 32 sont transmises à un ou plusieurs blocs de compression des sorties 34, qui fournissent la valeur finale prédite pour chaque sortie.

Dans le cas d'un récepteur à décodage itératif, le bloc de « retard en $\tau$ » 33 indique que les valeurs en sortie du bloc 32 à la turbo-itération $\tau$ seront stockées pour être utilisées comme entrées lors des calculs de la turbo-itération $\tau + 1$ par les blocs $30_p$ et par le bloc 32.

La fonction tabulée (Look Up Table - LUT) multidimensionnelle utilisée dans le bloc 32 est générée au préalable (avant l'application de l'algorithme de prédiction) avec la procédure suivante. Le mécanisme de démappage et de décodage décrit dans la figure 3, avec les blocs 105, 110, 111 et 112, sont implémentés de façon isolée. On procède alors à la génération aléatoire d'une séquence de pseudo-bloc d'information **b,** dont les éléments sont identiquement et indépendamment distribués de façon uniforme, qui est encodée par le codeur canal 11 et entrelacé par le module 12 pour fournir un pseudo-mot-de-code entrelacé **d** de qPM bits. Ce bloc est traité par un bloc 14 de modulation isolé en bande de base, et fournit le vecteur de symboles $x$, de taille $PM$, qui représente la concaténation des P blocs de données $x_p$. Par la suite on génère $PM$ échantillons de bruit complexes gaussiens circulairement symétriques de variance $1/\text{SNR}_R^{(\tau)}$, et on l'ajoute sur le vecteur $x$ pour fournir une séquence de symboles bruités $\hat{x}$ comme entrée au démodulateur souple 105. Simultanément au processus de génération de séquence de symboles bruités à partir de $\text{SNR}_R^{(\tau)}$, on utilise $I_{A,\text{DEM}}^{(\tau)}$ pour générer une séquence artificielle de LLRs a priori au démodulateur, $L_{A,DEM}(d)$, en faisant l'hypothèse que la distribution des LLRs conditionnés sur les bits $d$ est une distribution gaussienne avec une symétrie exponentielle. Dans ce cas une séquence de bruit gaussien de variance $2\mu_{A,\text{DEM}}^{(\tau)}$ est générée et sommée avec $\mu_{A,\text{DEM}}^{(\tau)}(1 - 2d_j)$, pour $j$ = 1, ..., $qPM$, pour obtenir une sequence de LLRs $L_{A,DEM}(d_j) \sim \mathcal{N}\left(\mu_{A,\text{DEM}}^{(\tau)}(1 - 2d_j), 2\mu_{A,\text{DEM}}^{(\tau)}\right)$. Le paramètre $\mu_{A,\text{DEM}}^{(\tau)}$ est obtenu à travers $\mu_{A,\text{DEM}}^{(\tau)} = J^{-1}\left(I_{A,\text{DEM}}^{(\tau)}\right)$, où la fonction bijective $J$ est définie par la relation :

$$I_A = J(\mu_A) = 1 - \int_{L \in \mathbb{R}} \log_2(1 + \exp(-L)) \frac{1}{\sqrt{4\mu_A}} \exp\left(-\frac{|L - \mu_A|^2}{2\mu_A}\right) dL. \qquad (15)$$

Similairement, si le décodeur canal comporte des itérations internes, on génère alors des LLRs sur les bits codés $c_j$ avec $L_{A,INT}(c_j) \sim \mathcal{N}\left(\mu_{A,\text{INT}}^{(\tau)}(1 - 2c_j), 2\mu_{A,\text{INT}}^{(\tau)}\right)$ où on vérifie $\mu_{A,\text{INT}}^{(\tau)} = J^{-1}\left(I_{A,\text{INT}}^{(\tau)}\right)$. En ayant donc les séquences pseudo-aléatoires contraintes $L_{A,DEM}(d)$ et $\hat{x}$, le démodulateur souple 105 est exécuté pour obtenir des LLRs extrinsèques sur $d$ (i.e. on active la fonctionnalité de « démappage » du démodulateur souple) puis les LLRs extrinsèques sur $d$ sont désentrelacés par le bloc désentrelaceur 110 pour obtenir des LLRs a priori sur $c$. Ces derniers sont fournis au décodeur 111, ainsi que les LLRs internes $L_{A,INT}(c)$, si cela est requis, et le décodeur 111 est exécuté. Le décodeur 111 fournit en sortie des LLRs a posteriori sur les bits d'information $b$ et des LLRs extrinsèques sur les bits codés $c$. Pour les décodeurs avec itérations internes, les LLRs extrinsèques internes sur les bits codés $c$ sont aussi extraits. La séquence d'information estimée $\hat{b}$ est obtenue en prenant des décisions dures sur les LLRs a posteriori en sortie du décodeur 111. Le taux d'erreur bit, et la présence ou non d'erreur paquet, sont calculés en comptant les différences entre le vecteur de bit d'information $\hat{b}$ et le vecteur généré $b$. Les LLRs extrinsèques sur les bits codés sont entrelacés pour obtenir des LLRs extrinsèques $L_{E,DEC}(d)$ sur les bits codés et entrelacés $d$. On peut alors calculer l'information mutuelle entre ces $L_{E,DEC}(d)$ et, pour estimer l'information extrinsèque en sortie du décodeur $I_{E,\text{DEC}}^{(\tau)}$. On peut similairement calculer l'information extrinsèque interne $I_{E,\text{INT}}^{(\tau)}$ en sortie du décodeur avec l'information mutuelle entre les LLRs internes et $c$. Par ailleurs, $v^{a(\tau+1)} = Var_{\mathcal{P}_m^{(\tau+1)}}[x]$ est calculée à partir des densités de probabilité $\mathcal{P}_m^{(\tau+1)}(\alpha)$, (i.e. l'ensemble des probabilités $\mathcal{P}_{m,p}^{(\tau+1)}(\alpha)$ concaténées) pour $m$ = 1, ..., $PM$, qui sont obtenues en utilisant les équations (11) et (12) où on utilise les LLRs extrinsèques du décodeur $L_{E,DEC}(d)$, à la place de la valeur $L_a^{(\tau)}$. En répétant ce processus avec un nombre suffisamment élevé de vecteurs $b$ générés, il est possible de construire un histogramme de ces sorties. Ainsi, avec un estimateur de moyenne, on peut calculer les valeurs des sorties PER$^{(\tau)}$, BER$^{(\tau)}$, $v^{a(\tau+1)}$, $I_{E,DEC}^{(\tau)}$, $I_{E,INT}^{(\tau)}$ correspondant aux paramètres d'entrée $\text{SNR}_R^{(\tau)}$, $I_{A,\text{DEM}}^{(\tau)}$, et $I_{A,\text{INT}}^{(\tau)}$. Par ailleurs, on peut mesurer avec un estimateur de variance, la variance sur les réalisations de $v^{a(\tau+1)}$, pour obtenir la déviation standard

$\sigma_{v^a}^{(\tau+1)}$ de la variance des estimées a priori, qui est une mesure de dispersion (de manière équivalente on aurait pu sauvegarder la variance des variances, au lieu de la déviation standard). Un exemple numérique pour les quantités $v_a$ et $\sigma_{v_a}$ de cette LUT est donné dans la figure 10.

La dispersion sauvegardée dans cette table (look-up table - LUT) sera utilisée pour améliorer la prédiction du comportement du récepteur dans le bloc « modèle semi-analytique du récepteur » 30p grâce à l'application d'un modèle statistique qui est utilisé pour générer un certain nombre de réalisations instantanées de la variance des symboles à partir de la dispersion $\sigma_{v^a}^{(\tau)}$ fournie par le bloc 32 à la turbo-itération précédente. De plus, la LUT du bloc 303 elle-même pourra estimer la bonne valeur de la dispersion à la prochaine auto-itération.

La figure 5 illustre de manière détaillée un exemple d'architecture pour le premier bloc de modélisation semi-analytique $30_p$ selon l'invention. La description de la figure 5 est valable pour une réalisation de la dispersion donnée, donc l'index « [*n*] » n'est jamais explicite.

Les notations utilisées sont :

- $\tau$: l'indice de la turbo-itération,
- *s*: l'indice de l'auto-itération,
- $H_p$ : la réalisation du canal sur le bloc de données p,
- $SNR_p$: le rapport signal-sur-bruit sur le bloc de données p
- $SNR'^{(\tau,s)}_{EQ,p}$ : le SNR post-égalisation du bloc $p$ à l'auto-itération *s* et à la turbo-itération $\tau$,
- $\chi_p^{(\tau,s)}$ : la puissance moyenne du canal après égalisation affectant le bloc $p$ à l'auto-itération *s* et à la turbo-itération $\tau$,
- $SNR^{(\tau,s)}_{EQ,p}$ : le SNR post-égalisation du bloc $p$ avec la prise en compte d'une dispersion, à l'auto-itération *s* et à la turbo-itération $\tau$,
- $I^{(\tau)}_{A,DEM}[n]$ : *nième* réalisation de l'information a priori fournie par le décodeur vers le démodulateur à la turbo-itération $\tau$,
- $v^{a(\tau)}$: la variance a priori fournie par modèle tabulé de démappage et décodage conjoints à la turbo-itération $\tau$, $v^{a(\tau)}$: la variance a priori fournie par modèle tabulé de démappage et décodage conjoints à la turbo-itération $\tau$,
- $\sigma_{v^a}^{(\tau)}$ : la dispersion (= déviation standard) de la variance a priori à la turbo-itération $\tau$,
- $v_p^{d(\tau,s)}$ : la variance du retour EP pour le bloc de données $p$ après lissage, à l'auto-itération *s* et à la turbo-itération $\tau$,
- $\sigma_{v^d,p}^{(\tau,s)}$ : la dispersion (déviation standard) de la variance du retour EP pour le bloc de données $p$ après lissage, à l'auto-itération *s* et à la turbo-itération $\tau$,
- $\epsilon_p^{d(\tau,s)}$ : une réalisation de la dispersion concernant le bloc de données $p$, à l'auto-itération *s* et à la turbo-itération $\tau$,
- $v_p^{*(\tau,s)}$ : la variance du retour EP pour le bloc de données $p$, à l'auto-itération *s* et à la turbo-itération $\tau$,
- $\sigma_{v^*,p}^{(\tau,s)}$ : la dispersion (déviation standard) de la variance du retour EP pour le bloc de données $p$, à l'auto-itération *s* et à la turbo-itération $\tau$,

Le bloc $30_p$ comprend un premier bloc « modèle analytique de l'égaliseur » 301 qui fournit pour chaque bloc $p$ du signal reçu traité, la valeur du SNR après égalisation $SNR'^{(\tau,s)}_{EQ,p}$ et la puissance du canal équivalent après égalisation $\chi_p^{(\tau,s)}$ en fonction de la réalisation de canal $H_p$ expérimentée par le bloc $p$ du signal (et supposée connue), de la variance du bruit avant égalisation (ou de façon équivalente du rapport signal sur bruit moyen avant égalisation $SNR_p$) et de la variance des symboles souples a priori $v^{a(\tau)}$ en provenance du modèle tabulé de démappage et décodage conjoints, en cas d'auto-itération *s* = 0, ou de la variance des symboles du retour EP $v_p^{d(\tau,s)}$ en provenance du modèle analytique du lissage EP, en cas d'auto-itération du récepteur $s > 0$.

La fonction de ce bloc est de représenter efficacement le comportement du bloc d'égalisation du récepteur réel en utilisant une fonction analytique qui est simple à calculer (par exemple, il n'y a pas d'intégration numérique)

Le bloc $30_p$ comprend un deuxième bloc « modèle analytique de la dispersion du SNR après égalisation » 302 qui, pour chaque bloc p de signal reçu, calcule un SNR après égalisation avec dispersion $\text{SNR}_{\text{EQ},p}^{(\tau,s)}$, en fonction du SNR après égalisation $\text{SNR}_{\text{EQ},p}^{\prime(\tau,s)}$ précédemment calculé et d'une réalisation de l'écart $\epsilon_p^{d(\tau,s)}$ sur la variance de symboles a priori. La réalisation de l'écart $\epsilon_p^{d(\tau,s)}$ est calculé par un générateur de nombre aléatoire 300 avec un modèle statistique prédéfini (par exemple, loi gaussienne, ou loi gamma, ou encore loi exponentielle). Le générateur de nombres aléatoires prend en entrée la dispersion sur la variance des symboles souples a priori $\sigma_{v^a}^{(\tau)}$ en cas de premier passage dans l'égaliseur juste après un décodage du code correcteur d'erreur, i.e. $s = 0$ (dans ce cas la dispersion sur la variance est donnée sur les symboles a priori en provenance du décodeur/démodulateur conjoints) ou la dispersion sur la variance du retour EP $\sigma_{v^d,p}^{(\tau,s)}$ en cas d'auto-itération du récepteur ($s > 0$).

La fonction du deuxième bloc 302 est d'ajouter une pénalisation à la valeur du SNR après égalisation du bloc courant de façon à prendre en compte les effets de dispersion dus à la petite taille des blocs de signal et des mots de codes considérés.

Le bloc $30_p$ comprend un troisième bloc 303 nommé « modèle tabulé du démodulateur souple EP » qui calcule, pour chaque bloc p de signal reçu, la variance moyenne des symboles extrinsèques $v_p^{\star(\tau,s)}$ (à chaque auto-itération s) et la dispersion de la variance des symboles extrinsèques $\sigma_{v^\star,p}^{(\tau,s)}$, à chaque auto-itération s, en fonction du SNR après égalisation avec dispersion $\text{SNR}_{\text{EQ},p}^{(\tau,s)}$ et de l'information mutuelle ou MI (Mutual Information) extrinsèque fournie par le décodeur au dernier essai de décodage, que le démodulateur souple voit comme une MI a priori dénotée $\text{I}_{A,\text{DEM}}^{(\tau)}$.

Ce troisième bloc 303 permet de représenter efficacement le comportement d'un bloc hautement non-linéaire, tel que le démodulateur souple EP du récepteur réel. Ceci est fait en utilisant une fonction tabulée à deux entrées et deux sorties. Avec cette fonction tabulée, il est possible de représenter le comportement du démodulateur souple pour tout type de canal, ce qui réduit la taille nécessaire pour la mémoire.

La fonction tabulée (LUT) multidimensionnelle utilisée dans le bloc 303 est générée au préalable (avant l'application de l'algorithme de prédiction) avec la procédure suivante. Le mécanisme de démodulation souple EP décrit dans la figure 3, avec le bloc 105 est implémenté de façon isolée.

Une séquence de blocs de données **x** (chaque bloc **x** est de taille *M*) est générée par un bloc 14 de modulation à partir des séquences de blocs de bits aléatoires (chaque bloc de bits est de taille *qM*), où les bits (qui représentent les bits codés et entrelacés) sont tirés de façon indépendante et identiquement distribués.

Par la suite, pour chaque bloc de données, on génère un vecteur de *M* échantillons de bruit complexes gaussiens circulairement symétriques de variance $1/SNR_{EQ,p}^{(\tau,s)}$, et on ajoute le vecteur de bruit au vecteur **x** pour fournir une séquence de symboles bruités $\hat{\boldsymbol{x}}$ comme entrée au démodulateur souple 105. Simultanément au processus de génération de séquence de symboles bruités à partir de $SNR_{EQ,p}^{(\tau,s)}$, on utilise $I_{A,\text{DEM}}^{(\tau)}$ pour générer une séquence artificielle de LLRs a priori au démodulateur, $L_{A,DEM}(\boldsymbol{d})$, en faisant l'hypothèse que la distribution des LLRs conditionnés sur les bits **d** est une distribution gaussienne avec une symétrie exponentielle. Dans ce cas on peut générer une séquence de bruit gaussienne de variance $2\mu_{A,\text{DEM}}^{(\tau)}$ et la sommer avec $\mu_{A,\text{DEM}}^{(\tau)}(1 - 2d_j)$, pour $j = 1, ..., qM$, pour obtenir une séquence de LLRs $L_{A,DEM}(d_j) \sim \mathcal{N}\left(\mu_{A,\text{DEM}}^{(\tau)}(1 - 2d_j), 2\mu_{A,\text{DEM}}^{(\tau)}\right)$. Le paramètre $\mu_{A,\text{DEM}}^{(\tau)}$ est obtenu avec $\mu_{A,\text{DEM}}^{(\tau)} = J^{-1}\left(I_{A,\text{DEM}}^{(\tau)}\right)$, où la fonction bijective $J$ est définie par la relation de l'équation (15). A partir des séquences

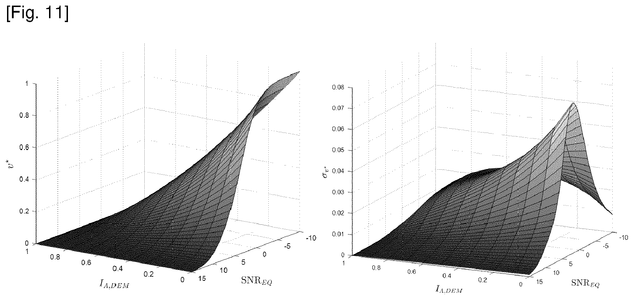

$L_{A,DEM}(\boldsymbol{d})$ et $\overset{\wedge}{\boldsymbol{x}}$, pour chaque bloc de données, le démodulateur souple 105 est exécuté pour obtenir les retours souples bruts EP (donc pour sa fonctionnalité de « démodulation EP »). Ceci est obtenu en estimant les distributions a posteriori des symboles $\mathcal{D}_m^{(\tau,s)}$, $m = 1, ..., M$, avec les équations (9)-(12) afin d'estimer la variance a posteriori moyenne du bloc de données $\bar{\gamma}^{(\tau,s)} = \frac{1}{M}\sum_{m=1}^{M} Var_{\mathcal{D}_m^{(\tau,s)}}[x_m]$, et d'effectuer ensuite le calcul de la « division gaussienne » de l'équation (8), avec $\overline{\gamma}^{(\tau,s)}$ $v_{\hat{x},p}^{(\tau,s)} = 1/SNR_{EQ,p}^{(\tau,s)}$ pour estimer $v_{\bar{x}}^{\star(\tau,s+1)}$, sauf pour le cas où le dénominateur de l'équation (8), est négatif, où on utilisera l'heuristique des équations (13)-(14). En répétant ce processus avec un nombre suffisamment élevé de blocs $\boldsymbol{d}$ générés, on peut construire un histogramme pour la sortie $v_{\bar{x}}^{\star(\tau,s+1)}$. Ainsi, avec un estimateur de moyenne, on peut calculer les valeurs des sorties $v_p^{\star(\tau,s+1)}$ correspondant aux paramètres d'entrée $SNR_{EQ,p}^{(\tau,s)}$ et $I_{A,DEM}^{(\tau)}$ correspondant au $p$-ème bloc de données, pour l'auto-itération $s$ et la turbo-itération $\tau$. Par ailleurs, avec un estimateur de variance, la variance sur les réalisations de $v_p^{\star(\tau,s+1)}$ est mesurée, pour obtenir la déviation standard $\sigma_{v^{\star},p}^{(\tau,s+1)}$ de la variance des estimés extrinsèques souples EP, qui est une mesure de dispersion (de manière équivalente on aurait pu sauvegarder la variance des variances, au lieu de la déviation standard). Un exemple de valeurs numériques qui peuvent être obtenues pour cette LUT est donné en figure 11.

Le bloc $30_p$ comprend aussi un bloc « modèle analytique du lissage EP » 304 qui prend en entrée la puissance du canal équivalent après égalisation $\chi_p^{(\tau,s)}$, les variances extrinsèques $v_p^{\star(\tau,s)}$ et leur dispersion $\sigma_{v^{\star},p}^{(\tau,s)}$ en provenance du bloc 303 qui modélise le démodulateur souple EP, ainsi que les variances extrinsèques lissées $v_p^{d(\tau,s)}$ et leurs dispersions $\sigma_{v^d,p}^{(\tau,s)}$ qui avaient été fournies par le bloc analytique de lissage 304 à l'auto-itération précédente. Le module analytique du lissage EP fournit en sortie les nouvelles variances extrinsèques lissées $v_p^{d(\tau,s+1)}$ et leurs dispersions $\sigma_{v^d,p}^{(\tau,s+1)}$ à utiliser dans l'auto-itération suivante respectivement par le bloc « modèle analytique de l'égaliseur » 301 et le bloc « générateur de nombre aléatoire » 300. Dans la figure 5, le passage de ces métriques à l'auto-itération suivante est représenté par les blocs « retards en $s$ », qui ont la fonction de stocker les métriques sorties à la fin de l'auto-itération en cours.

La fonction du bloc 304 est de représenter efficacement, à l'aide de formules analytiques, la dépendance des performances des paramètres de lissage du récepteur. Cela permet de ne pas devoir générer et stocker des courbes de comportement du démodulateur souple EP pour chaque jeu de ces paramètres de lissage, en obtenant ainsi un gain en occupation de mémoire.

En revenant à la figure 4 (ou à la figure 6 pour le cas non itératif), pour chacun des $P$ blocs de données, grâce aux blocs $30_p$, $p = 1, ..., P$, le procédé selon l'invention calcule plusieurs réalisations d'écarts sur la variance des symboles, à partir de la valeur de la dispersion de la variance des symboles, et prédit la performance du récepteur pour chacune de ces réalisations.

Après compression 31, et après le bloc 32 de modèle de démappage et de décodage conjoints, on obtient un paramètre représentatif des performances du récepteur, par exemple, une valeur de PER dénotée PER$^{(\tau)}[n]$, une valeur de BER dénotée BER$^{(\tau)}[n]$ et une valeur d'information extrinsèque du décodeur dénotée $I_{E,DEC}^{(\tau+1)}[n]$, à nouveau, pour chacune des réalisations. Ces valeurs peuvent être « compressées » (par exemple sommées et moyennées) par les blocs 34 pour obtenir les valeurs finales de la prédiction à partir de l'ensemble des réalisations. Cette dernière étape de calcul permet de prendre en compte la dégradation de performance résultant des mots de codes de petites tailles.

Les sorties concernant les quantités $v^{a(\tau+1)}$ $\sigma_{v^a}^{(\tau+1)}$ sont indexées en $\tau + 1$ à la différence des autres métriques de sortie. Cela est une écriture formelle rendue nécessaire par le fait que les variables à l'issue des blocs « retard en $\tau$ » en correspondance de $v^{a(\tau+1)}$, $\sigma_{v^a}^{(\tau+1)}$ ont le même nom. En pratique, avec la notation courante, pour $\tau = 0$, $v^{a(\tau)}$, $\sigma_{v^a}^{(\tau)}$ sont connues, initialisées à des valeur fixes et utilisées en entrée des blocs 30$_p$. A la fin de la turbo-itération $\tau = 0$, le bloc 32 délivre les métriques $v^{a(\tau+1)}$, $\sigma_{v^a}^{(\tau+1)}$ avec $\tau + 1 = 1$, qui seront utilisées à la prochaine turbo-itération, et ainsi de suite. Les métriques $v^{a(\mathcal{T}+1)}$, $\sigma_{v^a}^{(\mathcal{T}+1)}$, en sortie de 32 et des blocs 34 correspondants pour $\tau = \mathcal{T}$, peuvent être calculées mais elle sont inutiles parce que les turbo-itérations $\mathcal{T} + 1$ ne seront pas exécutées (par définition, la dernière turbo-itération est $\mathcal{T}$).

Selon une autre variante de réalisation, à la place de compresser les sorties avec les blocs 34, on va effectuer un calcul de moyenne $$\mathrm{SNR}_R^{(\tau)} = \frac{1}{N_{try}} \sum_{n=1}^{N_{try}} \mathrm{SNR}_R^{(\tau)}[n]$$ (ou tout autre fonction semblable) sur le SNR après compression en sortie du bloc 31, avant activation du bloc de modélisation tabulée de démappage et décodage conjoints. Ceci permet de diminuer la complexité de calcul et le temps de calcul en acceptant de perdre en précision.

Une autre variante de réalisation consiste, à la place de compresser les sorties avec les blocs 34, à effectuer le calcul des moyennes sur les SNR après égalisation avec dispersion $\mathrm{SNR}_{\mathrm{EQ,p}}^{(\tau,s)}[n]$ à la sortie des blocs 30p pour obtenir une métrique moyenne $$\mathrm{SNR}_{\mathrm{EQ,p}}^{(\tau,s)} = \frac{1}{N_{try}} \sum_{n=1}^{N_{try}} \mathrm{SNR}_{\mathrm{EQ,p}}^{(\tau,s)}[n]$$ pour chaque bloc de données. Cette variante permet une réduction de complexité de calculs en acceptant une diminution dans la précision pour prédire le comportement.

Comme il a été précédemment indiqué, lorsque l'on cherche à minimiser la latence d'exécution, il est possible implémenter $P$ blocs de modélisation semi-analytique du comportement de l'égaliseur et du démodulateur souple en parallèle, autrement on réutilisera séquentiellement une réalisation de l'écart de variance d'un bloc, pour prédire les $P$ blocs de données reçues qui composent le message envoyé.

Un exemple de succession d'étapes mises en oeuvre par le procédé selon l'invention va maintenant être donné, et il est détaillé aussi dans la figure 7. Le procédé prend en entrée :

- le nombre total d'auto-itérations $\mathcal{S}$, qui indique combien de fois il faudra auto-itérer à l'intérieur des P blocs de modélisation analytique du comportement de l'égaliseur et du démodulateur souple avec EP,
- le nombre total de turbo-itérations $\mathcal{T}$, qui indique combien de fois il faudra turbo-itérer à l'intérieur du dispositif de prédiction selon l'invention entre le bloc de modélisation tabulée de démappage et décodage conjoints et les $P$ blocs de modélisation semi-analytique du comportement de l'égaliseur et du démodulateur souple,
- $N_{try} \geq 0$, le nombre d'estimations différentes de métriques de sortie (PER, BER, MI extrinsèques) pour une turbo-itération donnée pouvant être cumulées pour calculer la valeur prédite finale. Pour une turbo-itération donnée, si le nombre total d'auto-itérations $\mathcal{S}$ est positif, il sera nécessaire de tirer

$$N_{try}\mathcal{S}$$

réalisations du vecteur d'écarts de la variance de symboles a priori, $\epsilon^{d(\tau,s)} = [\epsilon_1^{d(\tau,s)} \dots \epsilon_p^{d(\tau,s)} \dots \epsilon_P^{d(\tau,s)}]$. Nous affecterons donc l'indice [$n$] sur les quantités affectées par ces différentes réalisations, avec $n = 1, \dots, N_{try}$, et ces quantités sont indiquées par des flèches doubles sur les figures 4 et 6. Plus le nombre de réalisations $N_{try}$ est grand plus la complexité de la solution augmente,
- $\alpha^{(\tau)}$ des facteurs de calibration (nombres réels), à régler en fonction du schéma de modulation et codage à prédire. Ces facteurs sont habituellement tous réglés à la valeur 1.

Dans la suite, nous décrivons les étapes à exécuter pour le calcul d'une estimée de PER, BER et MI extrinsèque à la sortie du décodeur, donc pour chaque réalisation d'écart sur la variance a priori, selon la dispersion donnée, parmi les $N_{try}$ réalisations.

La première étape, est une étape d'initialisation, 41. On pose $\tau = 0$, avec $\tau$ l'index de turbo-itération qui va de

0 à $\mathcal{T}$, les variances a priori et extrinsèques à la sortie du décodeur, $v^{a(\tau)}[n]$, sont mises à un ($= \sigma_x^2$, i.e. la variance des symboles de la constellation), et la dispersion $\sigma_{v^a}^{(\tau)}[n]$ est mise à zéro. Par ailleurs, la MI a priori du démodulateur $I_{A,DEM}^{(0)}[n]$ qui est égale à la MI extrinsèque du décodeur $I_{E,DEC}^{(-1)}[n]$ est mise à zéro, et si le dispositif de prédiction selon l'invention modélise un décodeur avec un état interne conservant de l'information entre turbo itérations (dans le cas de modélisation d'un turbo décodeur), la MI a priori interne du décodeur $I_{A,INT}^{(0)}[n] = I_{E,INT}^{(-1)}[n]$ est mise à zéro.

La deuxième étape 42 consiste dans l'activation des $P$ blocs $30_p$ de modélisation semi-analytique du comportement de l'égaliseur et du démodulateur souple. Cette étape se compose de différentes sous-étapes:

A l'étape 420 d'initialisation des auto-itérations, on pose $s = 0$ avec s l'index d'auto-itération qui va de 0 à $\mathcal{S}$, on initialise les dispersions $\sigma_{v^\star,p}^{(\tau,s)}[n] = 0$ et $\sigma_{v^d,p}^{(\tau,0)}[n] = \sigma_{v^a}^{(\tau)}[n]$.

L'étape 421 active le bloc « modèle analytique de l'égaliseur » 301 avec les variances a priori initialisées à la première étape 41 si c'est la première activation. Le bloc calcule:

$$\xi_p^{(\tau,s)}[n] = \frac{1}{M} \sum_{m=0}^{M-1} \frac{\left|\underline{h}_{m,p}\right|^2}{1/\mathrm{SNR}_p + v_{\bar{x},p}^{(\tau,s)}[n]\left|\underline{h}_{m,p}\right|^2},$$

$$\underline{f}_{m,p}^{(\tau,s)}[n] = \frac{1}{\xi_p^{(\tau,s)}[n]} \frac{\underline{h}_{m,p}}{1/\mathrm{SNR}_p + v_{\bar{x},p}^{(\tau,s)}[n]\left|\underline{h}_{m,p}\right|^2}, \quad m = 0, \dots, M-1,$$

$$v_{\hat{x},p}^{'(\tau,s)}[n] = \frac{1}{\xi_p^{(\tau,s)}[n]} - v_{\bar{x},p}^{(\tau,s)}[n], (16)$$

où M est la taille du bloc, $\underline{h}_{m,p}$ les M coefficients de la réponse fréquentielle du canal vu par le bloc de données, $v_{\bar{x},p}^{(\tau,s)}[n] = v^{a(\tau)}[n]$ si c'est le premier passage dans ce bloc modèle analytique (s = 0) ou alors $v_{\bar{x},p}^{(\tau,s)}[n] = v_p^{d(\tau,s)}[n]$, si s > 0 (auto-itération), $\underline{f}_{m,p}[n]$ sont les coefficients du filtre égaliseur $f_p^{(\tau,s)}[n]$. $\mathrm{SNR}_p$ est la valeur du rapport signal sur bruit moyen avant égalisation et il est donc en relation directe avec la variance du bruit blanc gaussien perçu par le récepteur (sous hypothèse que la puissance du signal utile est normalisée à « 1 ») :

$$\sigma_{w,p}^2 = 1/\mathrm{SNR}_p.$$

On obtient la valeur de la variance du bruit après égalisation en calculant $\mathrm{SNR}_{EQ,p}^{'(\tau,s)}[n] = 1/v_{\hat{x},p}^{'(\tau,s)}[n]$. Pour simplifier les calculs, ce bloc peut directement présenter en sortie la valeur $v_{\hat{x},p}^{'(\tau,s)}[n]$.

Dans l'étape 421, le bloc modèle analytique de l'égaliseur 301 calcule et produit en sortie aussi la puissance moyenne du canal après égalisation :

$$\chi_p^{(\tau,s)}[n] = \frac{1}{M\left(\xi_p^{(\tau,s)}[n]\right)^2} \sum_{m=0}^{M-1} \frac{\left|\underline{h}_{m,p}\right|^4}{\left(\sigma_{w,p}^2 + v_{\bar{x},p}^{(\tau,s)}[n]\left|\underline{h}_{m,p}\right|^2\right)^2} = \frac{1}{M} \sum_{m=0}^{M-1} \left|\underline{f}_{m,p}^{(\tau,s)}[n]\underline{h}_{m,p}^*\right|^2 (17)$$

Cette quantité peut être interprétée comme une mesure de la sélectivité du canal. En effet, pour un canal non

sélectif en fréquence, $\chi_p^{(\tau,s)}[n] = 1$, alors que sa valeur augmente avec la sélectivité du canal, car un égaliseur linéaire laisse toujours un ISI résiduel et donc une réponse fréquentielle du canal après égalisation pas plate.

Lors de l'étape 422 on active le générateur de nombres aléatoires. Si le nombre de réalisations $N_{try}$ = 0, la solution considère que la variance des symboles a priori est exacte. Cela est obtenu en fixant $\epsilon_p^{d(\tau,s)}[n] = 0$ pour tous les blocs de données.

Si le nombre de réalisations $N_{try}$ est supérieur à 0, le bloc 300 calcule, pour chacun des $N_{try}$ réalisations, des écarts $\epsilon_p^{d(\tau,s)}[n]$ sur la variance des symboles a priori, en utilisant un modèle statistique prédéfini (par exemple, une loi gaussienne, une loi gaussienne repliée, une loi gamma, ou encore une loi exponentielle) en ayant en entrée :

- la dispersion de la variance des symboles souples, a priori $\sigma_{v^a}^{(\tau)}[n]$ en cas de premier passage dans l'égaliseur juste après un décodage du code correcteur d'erreur (dans ce cas la dispersion sur la variance est donnée sur les symboles a priori en provenance du décodeur/démodulateur conjoints),

- la dispersion de la variance du retour EP $\sigma_{v^d,p}^{(\tau,s)}[n]$ en cas d'auto-itération du récepteur ($s > 0$).

L'étape 423 consiste dans l'application des réalisations de dispersion à la variance (ou à l'SNR après égalisation) par le bloc 302 modèle analytique de l'impact de la dispersion sur le SNR après égalisation.

Pour chaque bloc de données $p$ et pour chaque auto-itération s et turbo-itération $\tau$, et chaque réalisation différente, on calcule la variance du bruit après égalisation et avec dispersion comme suit :

$$v_{\hat{x},p}^{(\tau,s)}[n] = \begin{cases} v_{\hat{x},p}'^{(\tau,s)}[n] + \left(1 - \chi_p^{(\tau,s)}[n]\right)\epsilon_p^{d(\tau,s)}[n], & \text{si } v_{\hat{x},p}'^{(\tau,s)}[n] \geq - \chi_p^{(\tau,s)}[n])\epsilon_p^{d(\tau,s)}[n] \\ v_{\hat{x},p}'^{(\tau,s)}[n] - \left(1 - \chi_p^{(\tau,s)}[n]\right)\epsilon_p^{d(\tau,s)}[n], & \text{si } v_{\hat{x},p}'^{(\tau,s)}[n] < -(1 - \chi_p^{(\tau,s)}[n])\epsilon_p^{d(\tau,s)}[n] \end{cases} \quad (18)$$

Le SNR après égalisation avec dispersion $\mathrm{SNR}_{EQ,p}^{(\tau,s)}$ est déduit simplement :

$\mathrm{SNR}_{EQ,p}^{(\tau,s)}[n] = 1/v_{\hat{x},p}^{(\tau,s)}[n]$, puisque nous supposons dans l'exemple que la variance des symboles de la constellation est $\sigma_x^2 = 1$. La formule précédente permet d'avoir toujours une variance du bruit après égalisation avec dispersion positive. De plus, nous notons que si le canal est peu sélectif en fréquence, le terme ($1 - \chi_p^{(\tau,s)}[n]$) sera proche de zéro et la dispersion aura un effet moindre. En revanche, pour les canaux très sélectifs en fréquence et donc plus difficiles à égaliser (et où les effets de taille courte sont plus importants), la dispersion aura un impact plus grand.

L'étape 424, exécuté seulement si

$$\mathcal{S} > 0 \text{ et } s < \mathcal{S}$$

(autrement les résultats ne seront de toute façon pas utilisés), consiste dans l'application du modèle tabulé du démodulateur souple EP 303 qui a pour but de modéliser le comportement d'un démodulateur souple de type EP au niveau des symboles, pour ce qui concerne le retour EP. Cette étape consiste dans l'application d'une Look-Up Table (LUT) pour obtenir les quantités de sortie :

- la variance des symboles extrinsèques $v_p^{\star(\tau,s+1)}$ (à calculer à chaque auto-itération $s$), qui prend des valeurs non-négatives,

- la dispersion de la variance des symboles extrinsèques $\sigma_{v^\star,p}^{(\tau,s+1)}$ (à calculer à chaque auto-itération $s$), qui prend des valeurs non-négatives,

en utilisant comme entrées :

- le SNR après égalisation avec dispersion $\mathrm{SNR}_{\mathrm{EQ},p}^{(\tau,s)}$ (typiquement en dB entre - 20 et 50 dB, ou converti en échelle linéaire),

- la valeur MI a priori $I_{A,\mathrm{DEM}}^{(\tau)}$ du démodulateur souple qui coïncide numériquement avec la MI extrinsèque fournie par le décodeur $I_{E,\mathrm{DEC}}^{(\tau-1)}$ à la turbo-itération précédente et qui prend des valeurs entre 0 et 1.

Cette table LUT peut être pré-calculée selon des formules analytiques ou par simulation du bloc de données traité par l'égaliseur et le démodulateur souple EP. La table LUT peut donc être décrite comme une fonction avec deux entrées et deux sorties :

$$\begin{bmatrix} v^{\star} \\ \sigma_{v^{\star}} \end{bmatrix} = LUT_{DEM} \begin{pmatrix} \mathrm{SNR}_{EQ} \\ I_A \end{pmatrix} \qquad (19)$$

où la dépendance avec le bloc p et l'auto-itération et la turbo-itération n'est pas explicitée dans la formule pour souligner simplement la relation fonctionnelle entre entrées et sorties. Cette table LUT dépend uniquement de la taille du bloc de données M et de la constellation. Si l'un de ces deux paramètres change, la table LUT doit être régénérée.
Si

$$S > 0 \text{ et } s < S,$$

la variance des symboles démodulés et sa dispersion sont calculées avec l'appel suivant:

$$\begin{bmatrix} v_p^{\star(\tau,s+1)}[n] \\ \sigma_{v^{\star},p}^{(\tau,s+1)}[n] \end{bmatrix} = LUT_{DEM} \begin{pmatrix} \mathrm{SNR}_{EQ,p}^{(\tau,s)}[n] \\ I_{E,\mathrm{DEC}}^{(\tau)}[n] \end{pmatrix}. \qquad (20)$$

L'étape 425, exécutée uniquement si

$$S > 0 \text{ et } s < S,$$

correspond au bloc 304 et consiste à mettre à jour les variances extrinsèques $v_p^{\star(\tau,s+1)}[n]$ et leur dispersion $\sigma_{v^{\star},p}^{(\tau,s+1)}[n]$ en provenance du bloc 303 selon la fonction de lissage EP, pour préparer la prochaine auto-itération, effectuant les calculs suivants :

$$v_p^{d(\tau,s+1)}[n] = \left(1 - \beta^{(\tau,s)}\right) v_p^{\star(\tau,s+1)}[n] + \beta^{(\tau,s)} v_p^{d(\tau,s)}[n], \quad (21)$$

$$\sigma_{v^d,p}^{(\tau,s+1)}[n] = \sqrt{(1-\beta^{(\tau,s)})^2 \left(\sigma_{v^{\star},p}^{(\tau,s+1)}[n]\right)^2 + \left[\beta^{(\tau,s)2} + (1-\beta^{(\tau,s)})^2 \left(\chi_p^{(\tau,s)}[n] - 1\right)^2\right] \left(\sigma_{v^d,p}^{(\tau,s)}[n]\right)^2}$$

Le terme $\left(1 - \beta^{(\tau,s)}\right)^2 \left(\chi_p^{(\tau,s)}[n] - 1\right)^2$ permet d'accumuler l'effet des dispersions sur les itérations en simulant une pénalisation progressive de la dispersion au cours des auto-itérations. Cela permet de prédire les dégradations dues aux blocs de petite taille pour les canaux sélectifs. Pour les canaux peu sélectifs ce terme devient presque nul.

La sortie globale de l'étape 42 pour chacun des *P* blocs de modélisation semi-analytique du comportement de l'égaliseur et du démodulateur souple est dénommée $\mathrm{SNR}_{\mathrm{EQ},p}^{(\tau)}[n]$ et elle est égale à la sortie de l'étape 423 de SNR après égalisation avec dispersion (ou de façon équivalente la variance du bruit après égalisation $v_{\hat{x},p}^{(\tau,s)}[n]$) calculée pour

$$s = \mathcal{S},$$

i.e. qui assure

$$\mathrm{SNR}_{\mathrm{EQ},p}^{(\tau)}[n] = \mathrm{SNR}_{\mathrm{EQ},p}^{(\tau,\mathcal{S})}[n].$$

La troisième étape 43 est la compression des SNR après égalisation avec dispersion par le bloc de compression, qui prend en entrée les SNR après égalisation avec dispersion $\mathrm{SNR}_{\mathrm{EQ},p}^{(\tau)}[n]$ (au terme des auto-itérations) sur tous les blocs *p* = 1, ... , *P* , des données reçues qui sont associées au mot de code envoyé et génère en sortie $\mathrm{SNR}_{\mathrm{R}}^{(\tau)}[n]$, le SNR équivalent du mot de code (après compression) en suivant la procédure décrite ci-après.

On applique en premier une fonction non-linéaire $\phi$ à chaque $\mathrm{SNR}_{\mathrm{EQ},p}^{(\tau)}[n]$ normalisé par le facteur de calibration $\alpha^{(\tau)}$ (typiquement égal à 1). Puis on calcule la moyenne des sorties de ces fonctions et on applique à cette valeur une autre fonction non-linéaire $\psi$.

A la sortie de cette deuxième fonction non-linéaire, on applique le facteur de calibration inverse pour obtenir le SNR équivalent $\mathrm{SNR}_{\mathrm{R}}^{(\tau)}$. Le calcul effectué à l'étape 43 est donc :

$$\mathrm{SNR}_{\mathrm{R}}^{(\tau)}[n] = \alpha^{(\tau)}\psi\left(\frac{1}{P}\sum_{p=1}^{P}\phi(\mathrm{SNR}_{\mathrm{EQ},p}^{'(\tau)}[n]/\alpha^{(\tau)})\right) \qquad (22)$$

Il est possible pour cette étape d'utiliser une variété de fonctions de compression présentes dans la littérature, soit en forme tabulée soit calculées en temps réel grâce à des expressions ou des approximations analytiques. Certains choix impliquent la nécessité d'une phase de calibration de ce bloc (= choix des facteurs $\alpha^{(\tau)}$ qui minimisent l'erreur de prédiction finale).

Une définition de ces fonctions non-linéaires qui permettent de travailler sans devoir calibrer la prédiction ($\alpha^{(\tau)}$ = 1, $\forall \tau$) est donnée.

La fonction $\phi$ peut être choisie égale à $I_E$, l'information mutuelle extrinsèque du démodulateur. A titre d'exemple $I_E$ peut-être l'information mutuelle d'une modulation codée calculée avec la formule suivante :

$$I_E(v_{\hat{x}}') = Q - \int_{\mathbb{C}} \log_2\left(\frac{\sum_{x\in\mathcal{X}}\exp\left(-\frac{|\hat{x}-x|^2}{v_{\hat{x}}'}\right)}{\exp\left(-\frac{|\hat{x}-x|^2}{v_{\hat{x}}'}\right)}\right)\frac{\exp\left(-\frac{|\hat{x}-x|^2}{v_{\hat{x}}'}\right)}{\pi v_{\hat{x}}'}\,\mathrm{d}\hat{x} \qquad (23)$$

où $v_{\hat{x}}' = 1/\mathrm{SNR}_{\mathrm{EQ}}'$ et $\mathcal{X}$ est la constellation.

Dans un autre exemple $I_E$ peut être l'information mutuelle d'une BICM calculée avec la formule suivante :

$$I_E(v'_{\hat{x}}) = Q - \frac{1}{2}\sum_{j=0}^{Q-1}\sum_{b=0}^{1}\int_{\mathbb{C}}\log_2\left(\frac{\sum_{x\in\mathcal{X}}\exp\left(-\frac{|\hat{x}-x|^2}{v'_{\hat{x}}}\right)}{\sum_{x\in x_j^b}\exp\left(-\frac{|\hat{x}-x|^2}{v'_{\hat{x}}}\right)}\right)\frac{\exp\left(-\frac{|\hat{x}-x|^2}{v'_{\hat{x}}}\right)}{\pi v'_{\hat{x}}}\,d\hat{x} \qquad (24)$$

où $x_j^b = \{x \in \mathcal{X}|\varphi_j^{-1}(x) = b\}$ est l'ensemble des points de la constellation tels que le j-ième bit de l'étiquette du point est égal à *b*.

Dans une variante de la solution, il est possible d'utiliser la MI BICM pour la turbo-itération 0 et la MI de la modulation codée pour les turbo-itérations suivantes.

La fonction $\psi$ peut être tout simplement l'inverse de $\phi$ : $\psi = \phi^{-1}$. Par exemple $\psi^{-1}$ peut être encore l'information mutuelle d'une modulation codée ou l'information mutuelle d'une BICM.

La quatrième étape 44 consiste dans l'application d'un modèle tabulé de démappage et décodage conjoints 32, qui est réalisé en appliquant une table LUT à trois entrées et six sorties :

$$\begin{bmatrix} \text{PER} \\ \text{BER} \\ v^a \\ \sigma_{v^a} \\ I_{E,DEC} \\ I_{E,INT} \end{bmatrix} = LUT_{DEC}\begin{pmatrix} \text{SNR}_R \\ I_{A,DEM} \\ I_{A,INT} \end{pmatrix} \qquad (25)$$

Les entrées sont : le SNR équivalent $SNR_R$, la MI a priori $I_{A,DEM}$ (qui modélise la MI a priori utilisée par le démodulateur souple en provenance du décodeur), et optionnellement $I_{A,INT}$ la MI a priori interne du décodeur, nécessaire par exemple si le code correcteur d'erreur est un turbo code. L'expression précédente ne contient pas d'index de turbo-itération pour mettre en évidence uniquement le lien entre les entrées et les sorties.

Les sorties sont, par exemple, le taux d'erreur paquet instantané PER associé au canal utilisé à l'entrée de la prédiction et à la réalisation de dispersion générée à l'intérieur de la prédiction, le taux d'erreur bit instantanée BER associé au canal utilisé à l'entrée de la prédiction et à la réalisation de dispersion générée à l'intérieur de la prédiction, la variance des symboles souples a priori $v^a$ et sa dispersion $\sigma_{v_a}$, la MI extrinsèque du décodeur $I_{E,DEC}$, et (optionnellement) la MI interne du décodeur $I_{E,INT}$.

La table LUT dépend du type de décodeur, de la taille du mot de code, de la constellation utilisée.

Pour calculer les paramètres ou les métriques permettant de prédire le comportement du récepteur dans l'étape 44, on peut utiliser la formule :

$$\begin{bmatrix} \text{PER}^{(\tau)}[n] \\ \text{BER}^{(\tau)}[n] \\ v^{a(\tau+1)}[n] \\ \sigma_{v^a}^{(\tau+1)}[n] \\ I_{E,DEC}^{(\tau)}[n] \\ I_{E,INT}^{(\tau)}[n] \end{bmatrix} = LUT_{DEC}\begin{pmatrix} SNR_R^{(\tau)}[n] \\ I_{A,DEM}^{(\tau)}[n] \\ I_{A,INT}^{(\tau)}[n] \end{pmatrix} \qquad (26)$$

où l'on pose $I_{A,DEM}^{(\tau)}[n] = I_{E,DEC}^{(\tau-1)}[n]$ et $I_{A,INT}^{(\tau)}[n] = I_{E,INT}^{(\tau-1)}[n]$ dû à la convention des index imposée.

Dans le cas où l'application finale de la prédiction utilise uniquement la valeur PER ou la valeur BER, il est possible de ne pas calculer les sorties du bloc qui ne sont pas nécessaire et ne sont pas rebouclées dans le prédicteur.

La cinquième étape 45 (correspondante aux blocs 34) consiste dans une étape de compression sur les sorties prédites par exemple les valeurs de $PER^{(\mathcal{T})}[n]$, $BER^{(\mathcal{T})}[n]$, et $I_{E,DEC}^{(\mathcal{T})}[n]$, pour obtenir une seule prédiction de ces quantités en fonction des $N_{try}$ réalisations. Dans cet exemple, l'étape de compression des sorties est faite seulement à l'issue de la dernière turbo-itération. Il est possible aussi d'obtenir les sorties compressées pour tout index de turbo-itération, cela peut être utile par exemple dans un schéma d'adaptation qui doit calculer le nombre minimal de turbo-itérations nécessaires pour atteindre une certaine performance.

L'étape 45 (i.e. les blocs 34) n'est pas nécessaire pour $N_{try}$ = 0 ou pour $N_{try}$ = 1, puisque le bloc précédent fournit une seule estimée par quantité.

Tout type de fonction à $N_{try}$ entrées et une sortie peut être utilisé (les fonctions pouvant être différentes pour chaque sortie) pour réaliser une compression des sorties. La réalisation principale est la fonction de moyenne :

$$\widehat{PER}^{(\mathcal{T})} = \frac{1}{N_{try}} \sum_{n=1}^{N_{try}} PER^{(\mathcal{T})}[n] \;;$$

$$\widehat{BER}^{(\mathcal{T})} = \frac{1}{N_{try}} \sum_{n=1}^{N_{try}} BER^{(\mathcal{T})}[n] \quad (27)$$

$$\hat{I}_{E,DEC}^{(\mathcal{T})} = \frac{1}{N_{try}} \sum_{n=1}^{N_{try}} I_{E,DEC}^{(\mathcal{T})}[n].$$

Dans une variante de la solution, pour diminuer la complexité, il est possible de fournir en entrée de la prédiction à la place de $N_{try}$, un vecteur de

$$\mathcal{T} + 1$$

valeurs

$$N_{try}^{(\tau)}, \ \tau = 0, ..., \mathcal{T},$$

où la valeur $N_{try}^{(\tau)}$ indique le nombre de réalisations de la dispersion à générer pour l'estimée à la turbo-itération $\tau$. En effet, pour $\tau$ = 0, il est souvent suffisant d'avoir zéro réalisation de dispersion, alors qu'au fur et à mesure que les turbo-itérations augmentent il est nécessaire d'augmenter le nombre de réalisations de dispersion. Cela est justement utilisé pour modéliser les effets de paquets et blocs de taille courte qui s'accumulent au fil des auto-itérations et turbo-itérations.

La description a été donnée dans le cas d'un système de transmission où l'émetteur et le récepteur utilisent une antenne. Sans sortir du cadre de l'invention, le procédé peut être utilisé pour la prédiction de performances de tout autre récepteur avec retour EP de l'art antérieur utilisant plusieurs antennes d'émission et/ou réception, en considérant en entrée un canal multi-antennaire, les valeurs moyennes SNR sur les voies, et en prenant en compte dans le bloc de modélisation semi-analytique du comportement de l'égaliseur et du démodulateur souple l'expression analytique de la variance du bruit après égalisation et de comprimer l'ensemble des valeurs SNR après égalisation dans un seul SNR équivalent. Certains schémas MIMO sont utilisés pour envoyer en parallèle plusieurs mots de code séparés spatialement (par un traitement antennaire). Dans ce cas plusieurs boucles d'itération entre les décodeurs (un par mot de code) et le démodulateur existent, par exemple comme il est décrit dans le document FR 1800146.

La prédiction peut être utilisée dans le cadre d'une simulation système (voir figure 8). Le but de ce type de simulation est d'évaluer les performances d'un système avec plusieurs utilisateurs en prenant compte un modèle de propagation et de canal, et au moins les spécificités des protocoles de couche physique et de couche d'accès au media (MAC) qui définissent le comportement des noeuds du système. Dans la figure 8 est schématisé rapidement le fonctionnement d'un tel simulateur dans un noeud récepteur. Quand un noeud récepteur est configuré pour recevoir un paquet en provenance d'un émetteur A, son protocole de couche PHY 80 présente au bloc « abstraction de la couche PHY » 86 la configuration de la couche PHY, c'est-à-dire les paramètres qui caractérisent la transmission entre l'émetteur A et le récepteur même : le type de modulation, codage, la taille du paquet, le type d'algorithme de réception utilisé par récepteur avec ses paramètres. Pour la simulation du même paquet en réception, le bloc « simulateur de canal physique » 85 fournit au bloc 86 l'état du canal (c'est-à-dire la ou les réalisations du canal de communication) expérimenté par le paquet. Le simulateur de canal physique forme cet état de canal à partir des informations sur la mobilité et l'emplacement des noeuds fournies par le bloc « caractéristiques de topologie et de mobilité » 82, des informations sur l'atténuation, le masquage, les évanouissements rapides de la réponse impulsionnelle du canal fournies par le bloc « caractéristiques du canal de propagation » 83 et des informations sur des effets radio liées à la puissance, à l'interférence interne ou externe au système, aux facteurs de bruits, aux gains d'antennes etc. fournies par le bloc « caractéristiques des limitations radio » 84. Le bloc « abstraction du récepteur de la couche PHY » 86 reçoit les entrées sur la configuration de la couche PHY et sur l'état de canal et, grâce à la solution dévoilée ici, prédit le taux d'erreur paquet instantané lié à la transmission en cours d'évaluation. Puis une variable aléatoire uniforme est tirée entre 0 et 1. Si la valeur de cette réalisation est supérieure du taux d'erreur paquet estimé, le bloc 86 décide que le paquet est reçu correctement, autrement il est considéré comme reçu pas correctement. Le bloc 86 donne cette information au « protocole couche MAC » 81, qui est en charge de simuler le comportement de la couche MAC du noeud récepteur. A partir de l'information « paquet correct ou pas », le bloc 81 entame la simulation du processus correspondant. Par exemple, si le paquet est bon, le débit (nombre de bits corrects reçus par unité de temps) du récepteur sera mis à jour et augmentera, alors que si le paquet n'est pas bon le débit diminuera. Nous remarquons que la simulation système est faite sur un cluster de calcul ou sur un ordinateur adapté à la charge d'un tel simulateur. L'invention dans ce cas est implémentée dans un logiciel qui est exécuté dans le matériel soit sur un processeur polyvalent (General Purpose Processor - GPP) soit sur un processeur spécialisé comme un processeur pour traitement numérique du signal (Digital Signal Processor - DSP).

La prédiction peut être utilisée aussi dans une application d'adaptation de lien, un exemple est détaillé en figure 9. Dans cet exemple, le récepteur 20 estime, à partir des symboles pilotes, toutes les réalisations de canal expérimentées par le paquet reçu et les fournit au bloc « abstraction du récepteur de la couche PHY ». Ce bloc a connaissance aussi de tout ou d'une partie des possibles schémas de modulation et codage (Modulation and Coding Scheme - MCS), i.e. combinaison de type de modulation, codage, la taille du paquet, qui peuvent être utilisés par la couche PHY. En connaissant le type d'algorithme que le récepteur lui-même utilise ainsi que la valeur de ses paramètres, pour chaque MCS connue par le bloc 153, le bloc 153 génère une prédiction de performance, cela peut être une valeur d'information mutuelle, un taux d'erreur paquet, etc. Le bloc 153 fournit ces métriques de performance prédites au bloc 152 « sélection du MCS optimale » qui, à partir d'une condition sur la qualité de réception (par exemple un seuil cible sur l'information mutuelle ou le taux d'erreur paquet), calcule le MCS qu'il souhaiterait que l'émetteur utilise dans ses prochaines transmissions. Typiquement ce MCS est celui qui a le débit le plus élevé tout en respectant les contraintes de qualité de réception imposées au bloc 152. L'information de la MCS optimale choisie par le récepteur est ensuite transmise sur un canal de retour à l'émetteur. L'émetteur (en fonction aussi des autres contraintes qu'il peut avoir) peut utiliser l'information de MCS optimale reçue pour sélectionner la bonne configuration de la partie de son émetteur (bloc 150) qui est en charge de segmenter, coder et moduler le signal à transmettre. Cette adaptation se fera de manière plus ou moins rapide de sorte à pouvoir être implémentée au niveau de la couche accès MAC (Medium Access Layer) à l'intérieur des procédures d'allocation de ressources des terminaux.

Le procédé et le dispositif de prédiction selon l'invention permettent de modéliser le comportement du récepteur EP au niveau du symbole, la génération de sa fonction de transfert est indépendante du canal et des paramètres de configurations. Ceci évite notamment de générer des tables de manière numérique pour chaque combinaison de réalisations de canal vues par le signal envoyé ou de paramétrage du récepteur. De plus, le procédé permet de prédire avec fiabilité le comportement en cas de mot de code court (par exemple centaines ou milliers de bits) transmis sur des ensembles de blocs de données courts. Le procédé de prédiction ne nécessite pas d'une procédure préalable de calibration tout en gardant une bonne précision d'estimation.

## Revendications

1.  Procédé de prédiction des performances d'un récepteur au sein d'un système de communication comprenant au moins un émetteur et un récepteur, ledit émetteur utilisant une modulation codée entrelacée par bit pour moduler les données avant transmission sur un canal de communication, ledit récepteur mettant en oeuvre la détection et le décodage des signaux reçus à travers une chaîne comprenant un égaliseur, un démodulateur, un décodeur de canal, où le démodulateur fournit un signal de retour à l'égaliseur, auto-itération, le procédé de prédiction comportant au moins les étapes suivantes :

- pour chaque bloc $p$ du signal reçu, pour chaque auto-itération $s$, déterminer la valeur du rapport sur bruit, SNR, après égalisation, $SNR_{EQ,p}'^{(0,s)}$ et la puissance du canal équivalent après égalisation $\chi_p^{(0,s)}$ en fonction d'une réalisation de canal $\boldsymbol{H}_p$ expérimentée par le bloc $p$ du signal, de la variance du bruit ou du rapport signal sur bruit SNR moyen avant égalisation $SNR_p$, de la variance des symboles souples basée sur la propagation d'espérance EP $v_p^{d(0,s)}$ en provenance de la sortie à la précédente auto-itération du modèle analytique du lissage basé sur la propagation d'espérance EP et du modèle tabulé du démodulateur basé sur la propagation d'espérance EP, (301),

- pour chaque bloc p de signal reçu, à chaque auto-itération s, calculer un SNR après égalisation avec dispersion $SNR_{EQ,p}^{(0,s)}$, en fonction du SNR après égalisation $SNR_{EQ,p}'^{(0,s)}$ précédemment calculé et d'une réalisation d'un écart $\epsilon_p^{d(0,s)}$ sur la variance de symboles a priori déterminée par un générateur de nombre aléatoire prenant en entrée la dispersion sur la variance des symboles $\sigma_{v^a}^{(0)}$, ou la dispersion sur la variance $\sigma_{v^d,p}^{(0,s)}$ du retour en cas d'auto-itération du récepteur (302),

- pour chaque bloc $p$ du signal reçu, à chaque auto-itération $s$, à l'exception de l'auto-itération finale, obtenir la variance des symboles extrinsèques $v_p^{\star(0,s+1)}$ et sa dispersion $\sigma_{v^\star,p}^{(0,s+1)}$, avec le modèle tabulé du démodulateur EP, à partir du SNR après égalisation avec dispersion $SNR_{EQ,p}^{(0,s)}$ (303),

- pour chaque bloc $p$ du signal reçu, à chaque auto-itération $s$, à l'exception de l'auto-itération finale, obtenir la variance des symboles souples EP $v_p^{d(0,s+1)}$, et sa dispersion $\sigma_{v^d,p}^{(0,s+1)}$, en appliquant le modèle analytique du lissage EP, en utilisant la variance des symboles extrinsèques $v_p^{\star(0,s+1)}$ et sa dispersion $\sigma_{v^\star,p}^{(0,s+1)}$, les valeurs de l'auto-itération précédente, de la variance souple EP $v_p^{d(0,s)}$ et de sa dispersion $\sigma_{v^d,p}^{(0,s)}$ et les paramètres de lissage associés, (304)

- à l'auto-itération finale

$$s = \mathcal{S},$$

calculer le SNR après égalisation compressé $SNR_R^{(0)}$ à partir des SNR après égalisation

$$SNR_{EQ,p}^{(0)} = SNR_{EQ,p}^{(0,\mathcal{S})}$$

fourni par chacun des modèles semi-analytiques du récepteur associés à $P$ blocs, avec une méthode de compression de SNR, (31)

- utiliser un modèle de démappage et de décodage conjoints en tenant compte de la valeur du SNR après égalisation compressé $SNR_R^{(0)}$ et d'une information a priori du démodulateur souple initialisée à zéro, pour obtenir une ou plusieurs métriques caractérisant les performances du récepteur (32).

2. Procédé de prédiction des performances d'un récepteur au sein d'un système de communication comprenant au moins un émetteur et un récepteur, l'émetteur utilisant une modulation codée entrelacée par bit pour moduler les données avant transmission sur un canal de communication, le récepteur mettant en oeuvre la détection et le décodage des signaux reçus au travers d'un égaliseur, d'un démodulateur, et d'un décodeur canal, pouvant échanger de l'information entre eux, comportant au moins les étapes suivantes :

- pour un bloc p du signal reçu, à chaque auto-itération s et à chaque turbo-itération $\tau$, déterminer la valeur du rapport sur bruit, SNR, après égalisation $SNR'^{(\tau,s)}_{EQ,p}$ et la puissance du canal équivalent après égalisation $\chi^{(\tau,s)}_p$ en fonction de la réalisation de canal $H_p$ expérimentée par le bloc $p$ du signal, de la variance du bruit avant égalisation ou de façon équivalente du rapport signal sur bruit moyen avant égalisation $SNR_p$, de la variance des symboles souples basée sur la propagation d'espérance EP $v^{d(\tau,s)}_p$ en provenance de la sortie à la précédente auto-itération d'un modèle tabulé du démodulateur EP suivie par un modèle analytique du lissage EP, et de la variance des symboles souples a priori $v^{a(\tau)}$ en provenance du décodeur/démodulateur conjoints,

- pour chaque bloc p de signal reçu, à chaque auto-itération s et à chaque turbo-itération $\tau$, calculer un SNR après égalisation avec dispersion $SNR^{(\tau,s)}_{EQ,p}$, en fonction du SNR après égalisation $SNR'^{(\tau,s)}_{EQ,p}$ précédemment calculé et d'une réalisation de l'écart $\epsilon^{d(\tau,s)}_p$ sur la variance de symboles a priori déterminée par un générateur de nombre aléatoire prenant en entrée la dispersion sur la variance des symboles,

- pour chaque bloc p de signal reçu, à chaque auto-itération $s$ et à chaque turbo-itération $\tau$, déterminer la variance moyenne des symboles extrinsèques $v^{\star(\tau,s+1)}_p$ et la dispersion de la variance des symboles extrinsèques $\sigma^{(\tau,s+1)}_{v^\star,p}$, en fonction du SNR après égalisation avec dispersion $SNR^{(\tau,s)}_{EQ,p}$ et de l'information a priori du démodulateur souple $I^{(\tau)}_{A,DEM}$,

- déterminer les nouvelles variances extrinsèques lissée $v^{d(\tau,s+1)}_p$ et leur dispersion $\sigma^{(\tau,s+1)}_{v^d,p}$ à utiliser dans l'auto-itération suivante s + 1 par le bloc de données à partir des variances extrinsèques $v^{\star(\tau,s+1)}_p$ et de leur dispersion $\sigma^{(\tau,s+1)}_{v^\star,p}$ en provenance d'un modèle de démodulateur souple EP, ainsi que les variances extrinsèques lissées $v^{d(\tau,s)}_p$ et leur dispersion $\sigma^{(\tau,s)}_{v^d,p}$ fournies à l'auto-itération précédente,

- pour chaque turbo-itération, appliquer pour l'ensemble de P blocs de données, sur les valeurs prédites du SNR après égalisation avec dispersion de l'auto-itération finale

$$SNR^{(\tau)}_{EQ,p} = SNR^{(\tau,\mathcal{S}_\tau)}_{EQ,p},$$

p = 1,..., P, une fonction de compression du SNR afin de prédire une valeur SNR après égalisation $SNR^{(\tau)}_R$ sur l'ensemble des blocs de données,

- utiliser un modèle de démappage et décodage conjoints des données tenant compte de la valeur du SNR après-égalisation compressé $SNR^{(\tau)}_R$, de l'information a priori pour le démodulateur souple $I^{(\tau)}_{A,DEM}$ et d'une éventuelle information a priori pour les décodeurs internes $I^{(\tau)}_{A,INT}$, qui sont tous les deux fournis par ce modèle lui-même à la précédente turbo-itération, pour obtenir une ou plusieurs métriques caractérisant la performance du récepteur.

**3.** Procédé selon la revendication 1 **caractérisé en ce qu'**il comporte une étape d'initialisation dans laquelle :

- on pose $s = 0$, $s$ étant l'index d'auto-itération qui va de 0 à $\mathcal{S}$,
- pour $s = 0$,
- les variances a priori et extrinsèques à la sortie du décodeur sont mises à 1,
- les dispersions $\sigma_{v^a}^{(0)}, \sigma_{v^d,p}^{(0,s)}, \sigma_{v^\star,p}^{(0,s)}$ correspondantes sont mises à 0,
- l'information mutuelle a priori du démodulateur $I_{A,DEM}^{(0)}$ qui est égale à l'information mutuelle extrinsèque du décodeur $I_{E,DEC}^{(-1)}$ est mise à 0.

**4.** Procédé selon la revendication 2 **caractérisé en ce qu'**il comporte une étape d'initialisation dans laquelle :

- on pose $s = 0$, $\tau = 0$, s étant l'index d'auto-itération qui va de 0 à $\mathcal{S}_\tau$ et $\tau$ étant l'index de turbo-itération qui va de 0 à $\mathcal{T}$,
- Pour $s = 0$, $\tau = 0$,
- les variances a priori et extrinsèques à la sortie du décodeur sont mises à 1,
- les dispersions $\sigma_{v^a}^{(\tau)}, \sigma_{v^d,p}^{(\tau,s)}, \sigma_{v^\star,p}^{(\tau,s)}$ correspondantes sont mises à 0,
- l'information mutuelle a priori du démodulateur $I_{A,DEM}^{(0)}$ qui est égale à l'information mutuelle extrinsèque du décodeur $I_{E,DEC}^{(-1)}$ est mise à 0.
- au début de chaque turbo-itération ($s = 0$, $\tau > 0$) $\sigma_{v^d,p}^{(\tau,0)} = \sigma_{v^a}^{(\tau)}$ pour tous les blocs $p$.

**5.** Procédé selon l'une des revendications 2 ou 4 **caractérisé en ce qu'**il comporte une étape de compression des valeurs de SNR après égalisation avec dispersion $\mathrm{SNR}_{EQ,p}^{(\tau,s)}$ sur l'ensemble des blocs p = 1,..., P des données reçues afin de générer une valeur en sortie $\mathrm{SNR}_R^{(\tau)}$, le SNR équivalent du mot de code en exécutant les étapes suivantes :

- appliquer une fonction non linéaire $\phi$ à chaque $\mathrm{SNR}_{EQ,p}^{(\tau)}$ normalisé par un facteur de calibration $\alpha^{(\tau)}$,
- calculer la moyenne des sorties et appliquer le facteur de calibration inverse pour obtenir le SNR équivalent $\mathrm{SNR}_R^{(\tau)}$ :

$$\mathrm{SNR}_R^{(\tau)} = \alpha^{(\tau)}\psi\left(\frac{1}{P}\sum_{p=1}^{P}\phi(\mathrm{SNR}_{EQ,p}'^{(\tau)}/\alpha^{(\tau)})\right).$$

**6.** Procédé selon la revendication 5 **caractérisé en ce que** la fonction non linéaire $\phi$ est choisie égale à l'information mutuelle d'une modulation codée calculée avec la formule suivante :

$$I_E(v_{\hat{x}}') = Q - \int_{\mathbb{C}} \log_2\left(\frac{\sum_{x\in\mathcal{X}}\exp\left(-\frac{|\hat{x}-x|^2}{v_{\hat{x}}'}\right)}{\exp\left(-\frac{|\hat{x}-x|^2}{v_{\hat{x}}'}\right)}\right)\frac{\exp\left(-\frac{|\hat{x}-x|^2}{v_{\hat{x}}'}\right)}{\pi v_{\hat{x}}'}d\hat{x}$$

où $v_{\hat{x}}' = 1/\mathrm{SNR}_{EQ}'$ et $\mathcal{X}$ est la constellation.

**7.** Procédé selon la revendication 4 **caractérisé en ce que** la fonction non linéaire $\phi$ est choisie égale à l'information mutuelle d'une modulation codée entrelacée par bit calculée avec la formule suivante :

$$I_E(v^{e\prime}) = Q - \frac{1}{2}\sum_{j=0}^{Q-1}\sum_{b=0}^{1}\int_{\mathbb{C}} \log_2\left(\frac{\sum_{x\in\mathcal{X}}\exp\left(-\frac{|x^e-x|^2}{v^{e\prime}}\right)}{\sum_{x\in\mathcal{X}_j^b}\exp\left(-\frac{|x^e-x|^2}{v^{e\prime}}\right)}\right)\frac{\exp\left(-\frac{|x^e-x|^2}{v^{e\prime}}\right)}{\pi v^{e\prime}}\,\mathrm{d}x^e$$

où $\mathcal{X}_j^b = \{x \in \mathcal{X}\,|\,\varphi_j^{-1}(x) = b\}$ est l'ensemble des points de la constellation tels que le j-ème bits de l'étiquette du point est égal à *b*.

8. Procédé selon la revendication 1 ou 3 **caractérisé en ce que** l'on génère pour chaque index d'auto-itération

$$s = 0, \dots, \mathcal{S}$$

des réalisations d'écart $\epsilon_p^{d(0,s)}[n]$ aléatoires, pour *n* = 1, … , $N_{try}$ ($N_{try}$ > 1) en supposant que la dispersion sur la variance des symboles souples a priori est égale à zéro dans le cas *s* = 0, ou en tenant compte de la dispersion $\sigma_{v^d,p}^{(0,s)}[n]$ de la variance des symboles souples EP si *s* > 0, tel que la ou les métriques de performances du récepteur sont obtenues pour chacune des $N_{try}$ réalisations.

9. Procédé selon les revendications 2, 4, 5, 6 ou 7 **caractérisé en ce que** l'on génère pour chaque index d'auto-itération

$$s = 0, \dots, \mathcal{S}$$

et chaque index de turbo-itération $\tau = 0, \dots, \mathcal{T}$ des réalisations d'écart $\epsilon_p^{d(\tau,s)}[n]$ aléatoires, pour *n* = 1, … , $N_{try}$ ($N_{try}$ > 1) en tenant compte de la dispersion sur la variance des symboles souples a priori $\sigma_{v^a}^{\tau}[n]$ si *s* = 0, et de la dispersion sur la variance du retour EP $\sigma_{v^d,p}^{(\tau,s)}$ en cas d'auto-itération du récepteur (s > 0), tel que la ou les métriques de performances du récepteur sont obtenues pour chacune des $N_{try}$ réalisations.

10. Procédé selon l'une des revendications précédentes **caractérisé en ce qu'**il comporte une étape de compression séparée pour chacune des métriques déterminées, le taux d'erreur paquet PER, le taux d'erreur bit BER, la variance des symboles souples a priori et sa dispersion, l'information mutuelle extrinsèque fournie par le décodeur, l'information mutuelle interne du décodeur, afin d'obtenir une seule prédiction par métrique de performance, à partir de l'ensemble des valeurs obtenues pour cette métrique à partir des différentes réalisations des écarts de dispersion (34).

11. Procédé selon les revendications 2, 4, 5, 6, 7, 9 ou 10 **caractérisé en ce que** l'on utilise un vecteur de $\mathcal{T}+1$ valeurs $N_{try}^{(\tau)}, \ \tau = 0, \dots, \mathcal{T}$, où la valeur entière $N_{try}^{(\tau)} \geq 0$ indique le nombre de réalisations de l'écart de la dispersion à générer pour l'estimée à l'index de la turbo-itération $\tau$.

12. Procédé selon l'une des revendications précédentes qui utilise la ou les métriques prédites pour déterminer la modulation, la taille de mot de code et le taux du code à utiliser au niveau de l'émetteur.

13. Dispositif pour prédire des performances d'un récepteur au sein d'un système de communication comprenant au moins un émetteur (10) utilisant une modulation codée (11) entrelacée par bit pour moduler les données avant transmission sur un canal de communication, le dispositif comprenant un égaliseur (108), un démodulateur (105) et un décodeur de canal de communication, ledit démodulateur étant configuré pour fournir un signal de retour audit égaliseur, **caractérisé en ce qu'**il comporte au moins les éléments suivants :

- un bloc ($30_p$) et un bloc (32) configurés pour déterminer la valeur du rapport sur bruit, SNR, après égalisation $SNR_{EQ,p}'^{(0,s)}$ et la puissance du canal équivalent après égalisation $\chi_p^{(0,s)}$ en fonction d'une réalisation de canal $H_p$ expérimentée par le bloc $p$ du signal, de la variance du bruit ou du rapport signal sur bruit moyen avant égalisation $SNR_p$, de la variance des symboles souples basée sur la propagation d'espérance EP $v_p^{d(0,s)}$ en provenance de la sortie à la précédente auto-itération du modèle analytique du lissage EP et du modèle tabulé du démodulateur EP pour chaque bloc $p$ du signal reçu et pour chaque auto-itération $s$, (301), et pour chaque bloc p de signal reçu, configuré pour calculer un SNR après égalisation avec dispersion $SNR_{EQ,p}^{(\tau,s)}$, en fonction du SNR après égalisation $SNR_{EQ,p}'^{(\tau,s)}$ précédemment calculé et d'une réalisation de l'écart $\epsilon_p^{d(\tau,s)}$ sur la variance de symboles a priori,

- une table (303) configurée pour obtenir la variance des symboles souples EP brutes $v_p^{\star(0,s+1)}$ et sa dispersion $\sigma_{v^\star,p}^{(0,s+1)}$, avec le modèle tabulé du démodulateur EP, à partir du SNR après égalisation avec dispersion $SNR_{EQ,p}^{(0,s)}$, pour chaque bloc $p$ du signal reçu, à chaque auto-itération $s$, à l'exception de l'auto-itération finale, obtenir,

- un module (304) configuré pour chaque bloc $p$ du signal reçu, à chaque auto-itération $s$, à l'exception de l'auto-itération finale, obtenir la variance des symboles souples EP $v_p^{d(0,s+1)}$ et sa dispersion $\sigma_{v^d,p}^{(0,s+1)}$, avec le modèle analytique du lissage EP, en utilisant la variance des symboles souples EP brutes $v_p^{\star(0,s+1)}$, et sa dispersion $\sigma_{v^\star,p}^{(0,s+1)}$, les valeurs de l'auto-itération précédente, de la variance souple EP $v_p^{d(0,s)}$ et de sa dispersion $\sigma_{v^d,p}^{(0,s)}$ et les paramètres de lissage associés, (304),

- un bloc de compression (31) configuré pour calculer le SNR après égalisation compressé $SNR_R^{(0)}$ à partir des SNR après égalisation

$$SNR_{EQ,p}^{(0)} = SNR_{EQ,p}^{(0,\mathcal{S})}$$

fourni par chacun des modèles semi-analytiques du récepteur associés à $P$ blocs, avec une méthode de compression de SNR à l'auto-itération finale

$$s = \mathcal{S},$$

- un module de démappage et de décodage conjoints tenant compte de la valeur du SNR après égalisation compressé $SNR_R^{(0)}$ et d'une information du démodulateur souple initialisée à zéro, pour obtenir au moins une métrique caractérisant les performances d'un récepteur.

**14.** Dispositif selon la revendication 13 **caractérisé en ce qu'**il comporte en outre un bloc de retard (33) pour un récepteur à décodage itératif, les valeurs en sortie du bloc (32) à la turbo-itération $\tau$ seront stockées pour être utilisées comme entrées lors des calculs de la turbo-itération $\tau + 1$ par les blocs ($30_p$) et par le bloc (32).

**Patentansprüche**

1. Verfahren zum Vorhersagen der Leistungen eines Empfängers in einem Kommunikationssystem, das mindestens einen Sender und einen Empfänger umfasst, wobei der Sender eine bitweise verschachtelte codierte Modulation benutzt, um Daten vor der Übertragung über einen Kommunikationskanal zu modulieren, wobei der Empfänger die Erkennung und Decodierung der empfangenen Signale durch eine einen Entzerrer, einen Demodulator, einen Kanaldecoder umfassende Kette implementiert, wobei der Demodulator ein Rücksignal, Auto-Iteration, an den Entzerrer liefert, wobei das Vorhersageverfahren mindestens die folgenden Schritte umfasst:

   - Bestimmen, für jeden Block $p$ des empfangenen Signals, für jede Auto-Iteration $s$, des Wertes des Rauschabstands, SNR, nach Entzerrung $SNR'^{(0,s)}_{EQ,p}$ und der Leistung des äquivalenten Kanals nach Entzerrung $\chi^{(0,s)}_p$ in Abhängigkeit von einer Kanalrealisierung $H_p$, die der Block $p$ des Signals erfährt, der Rauschvarianz oder des mittleren Signal-Rausch-Verhältnisses SNR vor Entzerrung $SNR_p$, der Varianz der weichen Symbole auf der Basis der erwarteten Ausbreitung EP $v^{d(0,s)}_p$ aus dem Ausgang bei der vorherigen Auto-Iteration des analytischen Glättungsmodells auf der Basis der erwarteten Ausbreitung EP und des Tabellenmodells des Demodulators auf der Basis der erwarteten Ausbreitung EP, (301),

   - Berechnen, für jeden Block $p$ des empfangenen Signals, bei jeder Auto-Iteration s, eines SNR nach Entzerrung mit Dispersion $SNR^{(0,s)}_{EQ,p}$, in Abhängigkeit von dem zuvor berechneten SNR nach Entzerrung $SNR'^{(0,s)}_{EQ,p}$ und einer Realisierung einer Abweichung $\epsilon^{d(0,s)}_p$ auf der A-priori-Symbolvarianz, die durch einen Zufallszahlengenerator bestimmt wird, der die Dispersion auf der Varianz der Symbole $\sigma^{(0)}_{v^a}$ oder die Dispersion auf der Varianz $\sigma^{(0,s)}_{v^d,p}$ der Rückkehr im Falle einer Auto-Iteration des Empfängers als Eingang nimmt (302),

   - Erhalten, für jeden Block $p$ des empfangenen Signals, bei jeder Auto-Iteration $s$, mit Ausnahme der letzten Auto-Iteration, der Varianz der extrinsischen Symbole $v^{*(0,s+1)}_p$ und ihrer Dispersion $\sigma^{(0,s+1)}_{v^*,p}$, mit dem Tabellenmodell des Demodulators EP, auf der Basis des SNR nach Entzerrung mit Dispersion $SNR^{(0,s)}_{EQ,p}$ (303),

   - Erhalten, für jeden Block $p$ des empfangenen Signals, bei jeder Auto-Iteration $s$, mit Ausnahme der letzten Auto-Iteration, der Varianz der weichen Symbole EP $v^{d(0,s+1)}_p$ und ihrer Dispersion $\sigma^{(0,s+1)}_{v^d,p}$, unter An-wendung des analytischen Glättungsmodells EP, durch Nutzen der Varianz der extrinsischen Symbole $v^{*(0,s+1)}_p$ und ihrer Dispersion $\sigma^{(0,s+1)}_{v^*,p}$, der Werte der vorhergehenden Auto-Iteration, der weichen Varianz EP $v^{d(0,s)}_p$ und ihrer Dispersion $\sigma^{(0,s)}_{v^d,p}$ P sowie der assoziierten Glättungsparameter, (304)

   - Berechnen, bei der letzten Auto-Iteration $s = S$, des komprimierten SNR nach Entzerrung $SNR^{(0)}_R$ auf der Basis der SNRs nach Entzerrung

   $$SNR^{(0)}_{EQ,p} = SNR^{(0,S)}_{EQ,p},$$

   die von jedem der mit $P$ Blöcken assoziierten semianalytischen Modelle des Empfängers geliefert werden, mit einer SNR-Kompressionsmethode, (31)

   - Nutzen eines gemeinsamen Demapping- und Decoding-Modells unter Berücksichtigung des Wertes des komprimierten SNR nach Entzerrung $SNR^{(0)}_R$ und einer auf Null initialisierten A-priori-Information des weichen Demodulators, um eine oder mehrere Metriken zu erhalten, die die Leistungen des Empfängers charakterisieren (32).

2. Verfahren zum Vorhersagen der Leistungen eines Empfängers in einem Kommunikationssystem, das mindestens einen Sender und einen Empfänger umfasst, wobei der Sender eine bitverschachtelte codierte Modulation verwendet, um die Daten vor der Übertragung über einen Kommunikationskanal zu modulieren, wobei der Empfänger die Erkennung und Decodierung der empfangenen Signale über einen Entzerrer, einen Demodulator und einen Kanaldecoder implementiert, die untereinander Informationen austauschen können, und das mindestens die folgenden Schritte umfasst:

- Bestimmen, für einen Block $p$ des empfangenen Signals, bei jeder Auto-Iteration s und bei jeder Turbo-Iteration $\tau$, des Wertes des Rauschabstands, SNR, nach Entzerrung $SNR_{EQ,p}'^{(\tau,s)}$ und der Leistung des äquivalenten Kanals nach Entzerrung $\chi_p^{(\tau,s)}$ in Abhängigkeit von der Kanalrealisierung $\boldsymbol{H_p}$, die der Block $p$ des Signals erfährt, der Varianz des Rauschens vor Entzerrung oder auf äquivalente Weise des mittleren Signal-Rausch-Verhältnisses vor Entzerrung $SNR_p$, der Varianz der weichen Symbole auf der Basis der erwarteten Ausbreitung EP $v_p^{d(\tau,s)}$ aus dem Ausgang bei der vorherigen Auto-Iteration eines Tabellenmodells des Demodulators EP, gefolgt von einem analytischen Glättungsmodell EP, und der Varianz der weichen A-priori-Symbole $v^{a(\tau)}$ aus dem gemeinsamen Decoder/Demodulator,
- Berechnen, für jeden Block $p$ des empfangenen Signals, bei jeder Auto-Iteration $s$ und bei jeder Turbo-Iteration $\tau$, eines SNR nach Entzerrung mit Dispersion $SNR_{EQ,p}^{(\tau,s)}$ in Abhängigkeit von dem zuvor berechneten SNR nach Entzerrung $SNR_{EQ,p}'^{(\tau,s)}$ und einer Realisierung der Abweichung $\epsilon_p^{d(\tau,s)}$ auf der A-priori-Symbolvarianz, bestimmt durch einen Zufallszahlengenerator, der die Dispersion auf die Symbol-Varianz als Eingang nimmt,
- Bestimmen, für jeden Block p des empfangenen Signals, bei jeder Auto-Iteration $s$ und bei jeder Turbo-Iteration $\tau$, der mittleren Varianz der extrinsischen Symbole $V_p^{*(\tau,s+1)}$ und der Dispersion der Varianz der extrinsischen Symbole $\sigma_{v^*,p}^{(\tau,\,s+1)}$ in Abhängigkeit vom SNR nach Entzerrung mit Dispersion $SNR_{EQ,p}^{(\tau,s)}$ und der A-priori-Information des weichen Demodulators $I_{A,DEM}^{(\tau)}$,
- Bestimmen der neuen geglätteten extrinsischen Varianzen $v_p^{d(\tau,s+1)}$ und ihrer Dispersion $\sigma_{v^d,p}^{(\tau,\,s+1)}$, die in der folgenden Auto-Iteration s + 1 zu verwenden sind, durch den Datenblock auf der Basis der extrinsischen Varianzen $V_p^{*(\tau,s+1)}$ und ihrer Dispersion $\sigma_{v^*,p}^{(\tau,\,s+1)}$ aus einem weichen Demodulatormodell EP sowie den geglätteten extrinsischen Varianzen $v_p^{d(\tau,s)}$ und ihrer Dispersion $\sigma_{v^d,p}^{(\tau,\,s)}$, die in der vorhergehenden Auto-Iteration geliefert wurden,
- Anwenden, für jede Turbo-Iteration, einer SNR-Kompressionsfunktion für alle P Datenblöcke auf die vorhergesagten SNR-Werte nach Entzerrung mit Dispersion der letzten Auto-Iteration

$$SNR_{EQ,p}^{(\tau)} = SNR_{EQ,p}^{(\tau,S_\tau)},$$

p =1, ..., P, um einen SNR-Wert nach Entzerrung $SNR_R^{(\tau)}$ über alle Datenblöcke vorherzusagen,

- Anwenden eines gemeinsamen Demapping- und Decodierungsmodells der Daten unter Berücksichtigung des Wertes des komprimierten SNR nach Entzerrung $SNR_R^{(\tau)}$, der A-priori-Information für den weichen Demodulator

$I_{A,DEM}^{(\tau)}$ und eine mögliche A-priori-Information für die internen Decoder $I_{A,INT}^{(\tau)}$ die beide von dieser Methode selbst bei der vorherigen Turbo-Iteration geliefert wurden, um eine oder mehrere Metriken zu erhalten, die die Leistung des Empfängers charakterisieren.

**3.** Verfahren nach Anspruch 1, **dadurch gekennzeichnet, dass** es einen Initialisierungsschritt umfasst, bei dem:

- $s = 0$ gesetzt wird, wobei s der Auto-Iterationsindex ist, der von 0 bis $\mathcal{S}$ reicht,
- für $s = 0$,
- die a priori und extrinsischen Varianzen am Ausgang des Decoders auf 1 gesetzt werden,
- die entsprechenden Dispersionen $\sigma_{v^a}^{(0)}, \sigma_{v^d,p}^{(0,s)}, \sigma_{v^\star,p}^{(0,s)}$ auf 0 gesetzt werden,
- die gegenseitige A-priori-Information des Demodulators $I_{A,DEM}^{(0)}$, die gleich der extrinsischen gegenseitigen Information des Decoders $I_{E,DEC}^{(-1)}$ ist, auf 0 gesetzt wird.

**4.** Verfahren nach Anspruch 2, **dadurch gekennzeichnet, dass** es einen Initialisierungsschritt umfasst, bei dem:

- s = 0, $\tau$ = 0 gesetzt wird, wobei s der Auto-Iterationsindex ist, der von 0 bis $\mathcal{S}_\tau$ reicht, und wobei $\tau$ der Turbo-Iterationsindex ist, der von 0 bis $\mathcal{T}$ reicht,
- für s = 0, $\tau$ = 0,
- die a priori und extrinsischen Varianzen am Ausgang des Decoders auf 1 gesetzt werden,
- die entsprechenden Dispersionen $\sigma_{v^a}^{(\tau)}, \sigma_{v^d,p}^{(\tau,s)}, \sigma_{v^\star,p}^{(\tau,s)}$ auf 0 gesetzt werden,
- die gegenseitige A-priori-Information des Demodulators $I_{A,DEM}^{(0)}$, die gleich der extrinsischen gegenseitigen Information des Decoders $I_{E,DEC}^{(-1)}$ ist, auf 0 gesetzt wird,
- zu Beginn jeder Turbo-Iteration $(s = 0, \tau > 0)$ $\sigma_{v^d,p}^{(\tau,0)} = \sigma_{v^a}^{(\tau)}$ für alle Blöcke $p$.

**5.** Verfahren nach einem der Ansprüche 2 oder 4, **dadurch gekennzeichnet, dass** es

einen Schritt umfasst des Komprimierens der SNR-Werte nach Entzerrung mit Dispersion $SNR_{EQ,p}^{(\tau,s)}$ über alle

Blöcke p = 1, ..., P der empfangenen Daten, um einen Wert $SNR_R^{(\tau)}$ am Ausgang zu erzeugen, der das äquivalente SNR des Codeworts darstellt, durch Ausführen der folgenden Schritte:

- Anwenden einer nichtlinearen Funktion $\phi$ auf jedes $SNR_{EQ,p}^{(\tau)}$, das mit einem Kalibrationsfaktor $\alpha^{(\tau)}$ normalisiert wurde,
- Berechnen des Mittelwerts der Ausgänge und Anwenden des inversen Kalibrationsfaktors, um das äquivalente

SNR, $SNR_R^{(\tau)}$ zu erhalten:

$$SNR_R^{(\tau)} = \alpha^{(\tau)}\psi\left(\tfrac{1}{P}\textstyle\sum_{p=1}^{P}\phi\left(SNR_{EQ,p}^{\prime(\tau)}/\alpha^{(\tau)}\right)\right).$$

**6.** Verfahren nach Anspruch 5, **dadurch gekennzeichnet, dass** die nichtlineare Funktion $\phi$ gleich der gegenseitigen Information einer codierten Modulation gewählt wird, berechnet mit der folgenden Formel:

$$I_E(v'_{\hat{x}}) = Q - \int_{\mathbb{C}} \log_2 \left( \frac{\sum_{x \in \mathcal{X}} \exp\left(-\frac{|\hat{x}-x|^2}{v'_{\hat{x}}}\right)}{\exp\left(-\frac{|\hat{x}-x|^2}{v'_{\hat{x}}}\right)} \right) \frac{\exp\left(-\frac{|\hat{x}-x|^2}{v'_{\hat{x}}}\right)}{\pi v'_{\hat{x}}} \mathrm{d}\hat{x}$$

wobei $v'_{\hat{x}} = 1/\mathrm{SNR}'_{EQ}$ und $\mathcal{X}$ die Konstellation ist.

7. Verfahren nach Anspruch 4, **dadurch gekennzeichnet, dass** die nicht-lineare Funktion $\phi$ gleich der gegenseitigen Information einer bitverschachtelten codierten Modulation gewählt wird, berechnet mit der folgenden Formel:

$$I_E(v^{e\prime}) = Q - \frac{1}{2} \sum_{j=0}^{Q-1} \sum_{b=0}^{1} \int_{\mathbb{C}} \log_2 \left( \frac{\sum_{x \in \mathcal{X}} \exp\left(-\frac{|x^e-x|^2}{v^{e\prime}}\right)}{\sum_{x \in \mathcal{X}_j^b} \exp\left(-\frac{|x^e-x|^2}{v^{e\prime}}\right)} \right) \frac{\exp\left(-\frac{|x^e-x|^2}{v^{e\prime}}\right)}{\pi v^{e\prime}} \mathrm{d}x^e$$

wobei $\mathcal{X}_j^b = \{x \in \mathcal{X} | \varphi_j^{-1}(x) = b\}$ die Menge der Punkte in der Konstellation ist, so dass das j-te Bit des Labels des Punkts gleich *b* ist.

8. Verfahren nach Anspruch 1 oder 3, **dadurch gekennzeichnet, dass** für jeden Auto-Iterationsindex

$$s = 0, \ ..., \mathcal{S}$$

zufällige Abweichungsrealisierungen $\epsilon_p^{d(0,s)}[n]$ erzeugt werden, für $n = 1,.... N_{try}$ ($N_{try} > 1$) unter der Annahme, dass die Dispersion über die Varianz der weichen A-priori-Symbole gleich null ist im Fall $s = 0$, oder unter Berücksichtigung der Dispersion $\sigma_{v^d,p}^{(0,s)}[n]$ der Varianz der weichen Symbole EP, wenn s > 0, so dass die Leistungsmetrik(en) des Empfängers für jede der $N_{try}$ Realisierungen erhalten wird/werden.

9. Verfahren nach Anspruch 2, 4, 5, 6 oder 7, **dadurch gekennzeichnet, dass** für jeden Auto-Iterationsindex s = 0, ..., S und jeden Turbo-Iterationsindex $\tau = 0, \ ..., \mathcal{T}$ zufällige Abweichungsrealisierungen $\epsilon_p^{d(\tau,s)}[n]$ erzeugt werden, für n = 1, ..... $N_{try}$ ($N_{try} > 1$) unter Berücksichtigung der Dispersion über die Varianz der weichen A-priori-Symbole $\sigma_{v^a}^{\tau}[n]$, wenn s = 0, und der Dispersion über die Varianz der Rückkehr EP $\sigma_{v^d,p}^{(\tau,s)}$ im Fall der Auto-Iteration des Empfängers (s > 0), so dass die Leistungsmetrik(en) des Empfängers für jede der $N_{try}$ Realisierungen erhalten wird/werden.

10. Verfahren nach einem der vorhergehenden Ansprüche, **dadurch gekennzeichnet, dass** es einen separaten Kompressionsschritt für jede der bestimmten Metriken, Paketfehlerrate PER, Bitfehlerrate BER, Varianz der weichen A-priori-Symbole und ihre Dispersion, die vom Decoder gelieferte extrinsische gegenseitige Information, die interne gegenseitige Information des Decoders umfasst, um eine einzige Vorhersage pro Leistungsmetrik auf der Basis aller Werte zu erhalten, die für diese Metrik aus den verschiedenen Realisierungen der Dispersionsabweichungen (34) erhalten wurden.

11. Verfahren nach den Ansprüchen 2, 4, 5, 6, 7, 9 oder 10, **dadurch gekennzeichnet, dass** ein Vektor von $\mathcal{T} + 1$ Werten $N_{try}^{(\tau)}, \ \tau = 0, ..., \mathcal{T}$ verwendet wird, wobei ein ganzzahliger Wert $N_{try}^{(\tau)} \geq 0$ die Anzahl der Realisierungen der Abweichung der Dispersion angibt, die für die Schätzung beim Index der Turbo-Iteration τ zu generieren ist.

**12.** Verfahren nach einem der vorhergehenden Ansprüche, das die vorhergesagte(n) Metrik(en) verwendet, um die Modulation, die Codewortgröße und die Codierrate zu bestimmen, die auf Senderebene zu verwenden sind.

**13.** Vorrichtung zur Vorhersage der Leistungen eines Empfängers in einem Kommunikationssystem, das mindestens einen Sender (10) umfasst, der eine bitverschachtelte codierte Modulation (11) verwendet, um die Daten vor der Übertragung über einen Kommunikationskanal zu modulieren, wobei die Vorrichtung einen Entzerrer (108), einen Demodulator (105) und einen Kommunikationskanal-Decoder umfasst, wobei der Demodulator so konfiguriert ist, dass er ein Rücksignal an den Entzerrer liefert, **dadurch gekennzeichnet, dass** sie mindestens die folgenden Elemente umfasst:

- einen Block ($30_p$) und einen Block (32), konfiguriert zum Bestimmen des Wertes des Rauschabstands, SNR, nach Entzerrung $\mathrm{SNR}_{EQ,p}^{\prime(0,s)}$ und die Leistung des äquivalenten Kanals nach Entzerrung $\chi_p^{(0,s)}$ in Abhängigkeit von einer Kanalrealisierung $\boldsymbol{H}_p$, die der Block $p$ des Signals erfährt, der Rauschvarianz oder des mittleren Signal-Rausch-Verhältnisses vor Entzerrung $\mathrm{SNR}_p$, der auf der erwarteten Ausbreitung basierenden Varianz der flexiblen Symbole EP $v_p^{d(0,s)}$ aus dem Ausgang bei der vorherigen Auto-Iteration des analytischen Glättungsmodells EP und des Tabellenmodells des Demodulators EP für jeden Block p des empfangenen Signals und für jede Auto-Iteration $s$, (301), und für jeden Block p des empfangenen Signals, konfiguriert zum Berechnen eines SNR nach Entzerrung mit Dispersion $\mathrm{SNR}_{EQ,p}^{(\tau,s)}$, in Abhängigkeit von dem zuvor berechneten SNR nach Entzerrung $\mathrm{SNR}_{EQ,p}^{\prime(\tau,s)}$ und einer Realisierung der Abweichung $\epsilon_p^{d(\tau,s)}$ auf die A-priori-Symbolvarianz,

- eine Tabelle (303), konfiguriert zum Erhalten der rohen weichen Symbole $\mathrm{EP}\, v_p^{\star(0,s+1)}$ und ihrer Dispersion $\sigma_{v^\star,p}^{(0,s+1)}$ mit dem Tabellenmodell des Demodulators EP auf der Basis des SNR nach Entzerrung mit Dispersion $\mathrm{SNR}_{EQ,p}^{(0,s)}$, für jeden Block $p$ des empfangenen Signals, bei jeder Auto-Iteration $s$, mit Ausnahme der letzten Auto-Iteration,

- ein Modul (304), konfiguriert zum Erhalten, für jeden Block $p$ des empfangenen Signals, bei jeder Auto-Iteration $s$, mit Ausnahme der letzten Auto-Iteration, der Varianz der weichen Symbole EP $v_p^{d(0,s+1)}$ und ihrer Dispersion $\sigma_{v^d,p}^{(0,s+1)}$ mit dem analytischen Glättungsmodell EP anhand der Varianz der rohen weichen Symbole EP $v_p^{\star(0,s+1)}$ und ihrer Dispersion $\sigma_{v^\star,p}^{(0,s+1)}$, der Werte der vorhergehenden Auto-Integration, der weichen Varianz EP $v_p^{d(0,s)}$ und ihrer Dispersion $\sigma_{v^d,p}^{(0,s)}$ sowie der assoziierten Glättungsparameter, (304),

- einen Kompressionsblock (31), konfiguriert zum Berechnen des komprimierten SNR nach Entzerrung $\mathrm{SNR}_R^{(0)}$ aus den SNRs nach Entzerrung

$$\mathrm{SNR}_{EQ,p}^{(0)} = \mathrm{SNR}_{EQ,p}^{(0,\mathcal{S})},$$

die von jedem der mit $P$ Blöcken assoziierten semianalytischen Modelle des Empfängers geliefert werden, mit einer SNR-Kompressionsmethode bei der letzten Auto-Iteration

$$s = \mathcal{S}\,,$$

- ein gemeinsames Demapping- und Decodierungsmodul unter Berücksichtigung des Wertes des komprimierten

SNR nach Entzerrung $\mathrm{SNR}_R^{(0)}$ und einer Information des weichen Demodulators, auf Null initialisiert, um mindestens eine Metrik zu erhalten, die die Leistungen eines Empfängers charakterisiert.

**14.** Vorrichtung nach Anspruch 13, **dadurch gekennzeichnet, dass** sie ferner einen Verzögerungsblock (33) für einen Empfänger mit iterativer Decodierung umfasst, wobei die Ausgangswerte des Blocks (32) bei der Turbo-Iteration $\tau$ gespeichert werden, um als Eingaben bei den Berechnungen der Turbo-Iteration $\tau + 1$ durch die Blöcke ($30_p$) und durch den Block (32) verwendet zu werden.

## Claims

**1.** A method for predicting the performances of a receiver in a communication system comprising at least one transmitter and one receiver, said transmitter using bit-interleaved coded modulation to modulate the data prior to transmission over a communication channel, said receiver implementing the detection and decoding of the received signals through a chain comprising an equaliser, a demodulator, a channel decoder, where the demodulator provides the equaliser with a feedback signal, referred to as self-iteration, the prediction method comprising at least the following steps:

- determining, for each block $p$ of the received signal, for each self-iteration $s$, the value of the signal-to-noise ratio, SNR, after equalisation, $\mathrm{SNR}_{\mathrm{EQ},p}^{\prime(0,s)}$ , and the power of the equivalent channel after equalisation, $\chi_p^{(0,s)}$ , as a function of a channel realisation $\boldsymbol{H}_p$ experienced by the block $p$ of the signal, of the variance of the noise or of the mean signal-to-noise ratio SNR before equalisation $\mathrm{SNR}_p$, of the variance of the soft symbols based on the expectation propagation EP $v_p^{d(0,s)}$ originating from the output for the previous self-iteration of the smoothing analytical model based on the expectation propagation EP and on the tabulated model of the demodulator based on the expectation propagation EP, (301);

- computing, for each block $p$ of the received signal, for each self-iteration $s$, an SNR after equalisation with dispersion $\mathrm{SNR}_{\mathrm{EQ},p}^{(0,s)}$ , as a function of the previously computed SNR after equalisation $\mathrm{SNR}_{\mathrm{EQ},p}^{\prime(0,s)}$ and of a realisation of a deviation $\epsilon_p^{d(0,s)}$ on the symbol variance a priori determined by a random number generator taking as input the dispersion on the variance of the symbols $\sigma_{v^a}^{(0)}$ , or the dispersion on the variance $\sigma_{v^d,p}^{(0,s)}$ of the feedback in the event of self-iteration of the receiver, (302);

- acquiring, for each block $p$ of the received signal, for each self-iteration $s$, except for the final self-iteration, the variance of the extrinsic symbols $v_p^{\star(0,s+1)}$ and its dispersion $\sigma_{v^\star,p}^{(0,s+1)}$ , with the tabulated model of the demodulator EP, from the SNR after equalisation with dispersion $\mathrm{SNR}_{\mathrm{EQ},p}^{(0,s)}$ , (303);

- acquiring, for each block $p$ of the received signal, for each self-iteration $s$, except for the final self-iteration, the variance of the soft symbols EP $v_p^{d(0,s+1)}$ and its dispersion $\sigma_{v^d,p}^{(0,s+1)}$ by applying the smoothing analytical model EP, using the variance of the extrinsic symbols $v_p^{\star(0,s+1)}$ and its dispersion $\sigma_{v^\star,p}^{(0,s+1)}$ , the values of the previous self-iteration, of the soft variance EP $v_p^{d(0,s)}$ and its dispersion $\sigma_{v^d,p}^{(0,s)}$ and the associated smoothing parameters, (304);

- computing, for the final self-iteration

$$s = \mathcal{S},$$

the compressed SNR after equalisation $\mathrm{SNR}_R^{(0)}$ from the SNRs after equalisation

$$\mathrm{SNR}_{\mathrm{EQ,p}}^{(0)} = \mathrm{SNR}_{\mathrm{EQ,p}}^{(0,\mathcal{S})}$$

provided by each of the semi-analytical models of the receiver associated with *P* blocks, with an SNR compression method, (31);
- using a joint demapping and decoding model taking into account the value of the compressed SNR after equalisation $\mathrm{SNR}_R^{(0)}$ and a priori information of the soft demodulator set to zero, in order to acquire one or more metrics characterising the performances of the receiver (32).

2. A method for predicting the performances of a receiver in a communication system comprising at least one transmitter and one receiver, the transmitter using bit-interleaved coded modulation to modulate the data prior to transmission over a communication channel, the receiver implementing the detection and decoding of the received signals through an equaliser, a demodulator and a channel decoder capable of exchanging information with each other, comprising at least the following steps:

- determining, for a block *p* of the received signal, for each self-iteration *s* and for each turbo-iteration $\tau$, the value of the signal-to-noise ratio, SNR, after equalisation, $\mathrm{SNR'}_{\mathrm{EQ,p}}^{(\tau,s)}$, and the power of the equivalent channel after equalisation $\chi_p^{(\tau,s)}$, as a function of the channel realisation $H_p$ experienced by the block *p* of the signal, of the variance of the noise before equalisation or, in an equivalent manner, of the mean signal-to-noise ratio before equalisation $\mathrm{SNR}_p$, of the variance of the soft symbols based on the expectation propagation EP $v_p^{d(\tau,s)}$ originating from the output for the previous self-iteration of a tabulated model of the demodulator EP followed by a smoothing analytical model EP and on the variance of the a priori soft symbols $v^{a(\tau)}$ originating from the joint decoder/demodulator;
- computing, for each block *p* of the received signal, for each self-iteration *s* and for each turbo-iteration $\tau$, an SNR after equalisation with dispersion $\mathrm{SNR}_{\mathrm{EQ,p}}^{(\tau,s)}$, as a function of the previously computed SNR after equalisation $\mathrm{SNR'}_{\mathrm{EQ,p}}^{(\tau,s)}$ and a realisation of the deviation $\epsilon_p^{d(\tau,s)}$ on the variance of symbols a priori determined by a random number generator taking as input the dispersion on the variance of the symbols;
- determining, for each block p of the received signal, for each self-iteration *s* and for each turbo-iteration $\tau$, the mean variance of the extrinsic symbols $v_p^{\star(\tau,s+1)}$ and the dispersion of the variance of the extrinsic symbols $\sigma_{v^\star,p}^{(\tau,s+1)}$, as a function of the SNR after equalisation with dispersion $\mathrm{SNR}_{\mathrm{EQ,p}}^{(\tau,s)}$ and of the a priori information of the soft demodulator $I_{A,\mathrm{DEM}}^{(\tau)}$;
- determining the new smoothed extrinsic variances $v_p^{d(\tau,s+1)}$ and their dispersion $\sigma_{v^d,p}^{(\tau,s+1)}$ to be used in the next self-iteration s + 1 by the data block from the extrinsic variances $v_p^{\star(\tau,s+1)}$ and their dispersion $\sigma_{v^\star,p}^{(\tau,s+1)}$ originating from a soft demodulator model EP, as well as the smoothed extrinsic variances $v_p^{d(\tau,s)}$ and their dispersion $\sigma_{v^d,p}^{(\tau,s)}$ provided for the previous self-iteration;
- applying, for each turbo-iteration, for all the P data blocks, on the predicted values of the SNR after equalisation with dispersion of the final self-iteration

$$SNR_{EQ,p}^{(\tau)} = SNR_{EQ,p}^{(\tau,S_\tau)},$$

p = 1,...,P, a compression function of the SNR in order to predict an SNR value after equalisation $SNR_R^{(\tau)}$ over all the data blocks;

- using a joint demapping and decoding model of the data taking into account the value of the compressed SNR after equalisation $SNR_R^{(\tau)}$, the a priori information for the soft demodulator $I_{A,DEM}^{(\tau)}$ and a possible a priori information for the internal decoders $I_{A,INT}^{(\tau)}$, which are both provided by this model itself for the previous turbo-iteration, in order to acquire one or more metrics characterising the performances of the receiver.

3. The method according to claim 1, **characterised in that** it comprises an initialisation step, in which:

- is set s = 0, with s being the self-iteration index that ranges from 0 to $\mathcal{S}$;
- for s = 0,
- the a priori and extrinsic variances at the output of the decoder are set to 1;
- the corresponding dispersions $\sigma_{v^a}^{(0)}, \sigma_{v^d,p}^{(0,s)}, \sigma_{v^\star,p}^{(0,s)}$ are set to 0;
- the a priori mutual information of the demodulator $I_{A,DEM}^{(0)}$, which is equal to the extrinsic mutual information of the decoder $I_{E,DEC}^{(-1)}$, is set to 0.

4. The method according to claim 2, **characterised in that** it comprises an initialisation step, in which:

- is set s = 0, $\tau$ = 0, with s being the self-iteration index that ranges from 0 to $\mathcal{S}_\tau$ and $\tau$ being the turbo-iteration index that ranges from 0 to $\mathcal{T}$;
- for s = 0, $\tau$ = 0,
- the a priori and extrinsic variances at the output of the decoder are set to 1;
- the corresponding dispersions $\sigma_{v^a}^{(\tau)}, \sigma_{v^d,p}^{(\tau,s)}, \sigma_{v^\star,p}^{(\tau,s)}$ are set to 0;
- the a priori mutual information of the demodulator $I_{A,DEM}^{(0)}$, which is equal to the extrinsic mutual information of the decoder $I_{E,DEC}^{(-1)}$, is set to 0;
- at the beginning of each turbo-iteration $(s = 0, \tau > 0)$ $\sigma_{v^d,p}^{(\tau,0)} = \sigma_{v^a}^{(\tau)}$ for all the blocks p.

5. The method according to any of claims 2 or 4, **characterised in that** it comprises a step of compressing the SNR values after equalisation with dispersion $SNR_{EQ,p}^{(\tau,s)}$ on all the blocks p = 1,..., P of the received data in order to generate an output value $SNR_R^{(\tau)}$, the equivalent SNR of the code word, by performing the following steps:

- applying a non-linear function $\phi$ to each $SNR_{EQ,p}^{(\tau)}$ normalised by a calibration factor $\alpha^{(\tau)}$;
- computing the mean of the outputs and applying the inverse calibration factor in order to acquire the equivalent SNR, $SNR_R^{(\tau)}$:

$$\mathrm{SNR}_{\mathrm{R}}^{(\tau)} = \alpha^{(\tau)}\psi\left(\tfrac{1}{P}\Sigma_{p=1}^{P}\phi\left(\mathrm{SNR}_{\mathrm{EQ},p}^{\prime(\tau)}/\alpha^{(\tau)}\right)\right)$$

.

6. The method according to claim 5, **characterised in that** the non-linear function $\phi$ is selected so as to be equal to the mutual information of a coded modulation computed with the following formula:

$$I_E(v_{\hat{x}}') = Q - \int_{\mathbb{C}} \log_2\left(\frac{\Sigma_{x\in X}\exp\left(-\frac{|\hat{x}-x|^2}{v_{\hat{x}}'}\right)}{\exp\left(-\frac{|\hat{x}-x|^2}{v_{\hat{x}}'}\right)}\right)\frac{\exp\left(-\frac{|\hat{x}-x|^2}{v_{\hat{x}}'}\right)}{\pi v_{\hat{x}}'}\mathrm{d}\hat{x}$$

,

where $v_{\hat{x}}' = 1/\mathrm{SNR}_{\mathrm{EQ}}'$ and $X$ is the constellation.

7. The method according to claim 4, **characterised in that** the non-linear function $\phi$ is selected so as to be equal to the mutual information of a bit-interleaved coded modulation computed with the following formula:

$$I_E(v^{e\prime}) = Q - \frac{1}{2}\sum_{j=0}^{Q-1}\sum_{b=0}^{1}\int_{\mathbb{C}} \log_2\left(\frac{\Sigma_{x\in X}\exp\left(-\frac{|x^e-x|^2}{v^{e\prime}}\right)}{\Sigma_{x\in X_j^b}\exp\left(-\frac{|x^e-x|^2}{v^{e\prime}}\right)}\right)\frac{\exp\left(-\frac{|x^e-x|^2}{v^{e\prime}}\right)}{\pi v^{e\prime}}\mathrm{d}x^e$$

,

where $X_j^b = \{x\in X\,|\,\varphi_j^{-1}(x)=b\}$ is all the points of the constellation such that the j-th bit of the tag of the point is equal to *b*.

8. The method according to claim 1 or 3, **characterised in that**, for each self-iteration index

$$s = 0,\dots,\mathcal{S},$$

random deviation realisations $\epsilon_{\mathrm{p}}^{d(0,s)}[n]$ are generated, for $n = 1, ..., N_{try}$ ($N_{try} > 1$) assuming that the dispersion on the variance of the a priori soft symbols is zero in case $s = 0$, or taking into account the dispersion $\sigma_{v^d,p}^{(0,s)}[n]$ of the variance of the soft symbols EP if $s > 0$, such that the performance metric(s) of the receiver is/are acquired for each of the $N_{try}$ realisations.

9. The method according to claims 2, 4, 5, 6 or 7, **characterised in that**, for each self-iteration index

$$s = 0,\dots,\mathcal{S}$$

and each turbo-iteration index

$$\tau = 0,\dots,\mathcal{T}$$

random deviation realisations $\epsilon_{\mathrm{p}}^{d(\tau,s)}[n]$ are generated, for $n = 1, ...,N_{try}$ ($N_{try} > 1$), taking into account the dispersion on the variance of the a priori soft symbols $\sigma_{v^a}^{\tau}[n]$ if $s = 0$, and the dispersion on the variance of the feedback EP

$\sigma_{v^d,p}^{(\tau,s)}$ in case of self-iteration of the receiver (s > 0), such that the performance metric(s) of the receiver is/are acquired for each of the $N_{try}$ realisations.

10. The method according to any of the preceding claims, **characterised in that** it comprises a step of separate compression for each of the determined metrics, the packet error rate PER, the bit error rate BER, the variance of the a priori soft symbols and its dispersion, the extrinsic mutual information provided by the decoder, the internal mutual information of the decoder, in order to acquire a single prediction per performance metric from all the values acquired for this metric from the various realisations of the dispersion deviations (34).

11. The method according to claims 2, 4, 5, 6, 7, 9 or 10, **characterised in that** a vector of $\mathcal{T}+1$ values $N_{try}^{(\tau)}, \quad \tau = 0,\ldots,\mathcal{T},$ is used, where the integer value $N_{try}^{(\tau)} \geq 0$ indicates the number of realisations of the deviation of the dispersion to be generated for the estimate on the index of the turbo iteration $\tau$.

12. The method according to any of the preceding claims that uses the predicted metric(s) to determine the modulation, the code word size and the code rate to be used on the transmitter.

13. A device for predicting the performances of a receiver in a communication system comprising at least one transmitter (10) using bit-interleaved coded modulation (11) to modulate the data before transmission on a communication channel, the device comprising an equaliser (108), a demodulator (105) and a communication channel decoder, said demodulator being configured to provide said equaliser with a feedback signal, **characterised in that** it comprises at least the following elements:

- a block ($30_p$) and a block (32) configured to determine the value of the signal-to-noise ratio, SNR, after equalisation, $SNR_{EQ,p}'^{(0,s)}$, and the power of the equivalent channel after equalisation, $\chi_p^{(0,s)}$, as a function of a channel realisation $H_p$ experienced by the block $p$ of the signal, of the variance of the noise or of the mean signal-to-noise ratio before equalisation $SNR_p$, of the variance of the soft symbols based on the expectation propagation EP $v_p^{d(0,s)}$ originating from the output for the previous self-iteration of the smoothing analytical model EP and of the tabulated model of the demodulator EP for each block p of the received signal and for each self-iteration $s$, (301), and for each block p of the received signal, configured to compute an SNR after equalisation with dispersion $SNR_{EQ,p}^{(\tau,s)}$, as a function of the SNR after equalisation $SNR_{EQ,p}'^{(\tau,s)}$ previously computed and a realisation of the deviation $\epsilon_p^{d(\tau,s)}$ on the a priori variance of symbols;

- a table (303) configured to acquire the variance of the raw soft symbols EP $v_p^{\star(0,s+1)}$ and its dispersion $\sigma_{v^\star,p}^{(0,s+1)}$, with the tabulated model of the demodulator EP, from the SNR after equalisation with dispersion $SNR_{EQ,p}^{(0,s)}$, for each block $p$ of the received signal, for each self-iteration $s$, except for the final self-iteration;

- a module (304) configured for each block $p$ of the received signal, for each self-iteration $s$, except for the final self-iteration, acquiring the variance of the soft symbols EP $v_p^{d(0,s)}$ and its dispersion $\sigma_{v^d,p}^{(0,s)}$, with the analytical smoothing model EP, using the variance of the raw soft symbols EP $v_p^{\star(0,s+1)}$ and its dispersion $\sigma_{v^\star,p}^{(0,s+1)}$, the values of the previous self-iteration, of the soft variance EP $v_p^{d(0,s)}$ and its dispersion $\sigma_{v^d,p}^{(0,s)}$, and the associated smoothing parameters, (304);

- a compression block (31) configured to compute the compressed SNR after equalisation $SNR_R^{(0)}$ from the SNRs after equalisation

$$SNR_{EQ,p}^{(0)} = SNR_{EQ,p}^{(0,\mathcal{S})}$$

provided by each of the semi-analytical models of the receiver associated with P blocks, with a method for compressing SNR for the final self-iteration

$$s = \mathcal{S};$$

- a joint demapping and decoding module taking into account the value of the compressed SNR after equalisation $SNR_R^{(0)}$ information of the soft demodulator set to zero, in order to acquire at least one metric characterising the performances of a receiver.

14. The device according to claim 13, **characterised in that** it further comprises a delay block (33) for an iterative decoding receiver, the output values of the block (32) for the turbo-iteration $\tau$ will be stored in order to be used as inputs during computations of the turbo-iteration $\tau + 1$ by the blocks (30$_p$) and by the block (32).

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2957057 A

- FR 1800146

**Littérature non-brevet citée dans la description**

- **J. BOUTROS ; G. CAIRE.** Iterative multiuser joint decoding: unified framework and asymptotic analysis. *IEEE Trans. Inf. Theory,* Juillet 2002, vol. 48 (7), 1772-1793
- **S. TEN BRINK.** Designing itérative decoding schemes with the extrinsic information transfer chart. *AEU Int. J. Electron. Commun.,* Janvier 2000, vol. 54 (6
- **R. VISOZ ; A. O. BERTHET et al.** Semi-analytical performance prédiction methods for itérative MMSE-IC multiuser MIMO joint decoding. *IEEE Trans. Commun.,* Septembre 2010, vol. 58 (9), 2576-2589
- **S. SAHIN ; A. M. CIPRIANO ; C. POULLIAT ; M. BOUCHERET.** A framework for itérative frequency domain EP-based receiver design. *IEEE Trans. Commun.,* Décembre 2018, vol. 66 (12), 6478-6493

- **K. TAKEUCHI.** Rigorous dynamics of expectation-propagation-based signal recovery from unitarily invariant measurements. *IEEE Proc. In Int. Symp. on Information Theory (ISIT),* Juin 2017, 501-505
- **SAHIN SERDAR et al.** *Iterative Decision Feedback Equalization Using Online Prédiction*
- **SAHIN SERDAR et al.** *Iterative Equalization With Decision Feedback Based on Expectation Propagation*
- **WU SHENG et al.** *Message-Passing Receiver for Joint Channel Estimation and Decoding in 3D Massive MIMO-OFDM Systems*
- **B. MUQUET ; ZHENGDAO WANG, G. ; B. GIANNAKIS et al.** Cyclic prefixing or zéro padding for wireless multicarrier transmissions?. *IEEE Transactions on Communications,* Décembre 2002, vol. 50.12, 2136-2148